# EUROPEAN PATENT SPECIFICATION

(11) **EP 4 431 999 B1**
(45) Date of publication and mention of the grant of the patent: **06.05.2026**
(21) Application number: 22902920.2
(22) Date of filing: 06.09.2022
(51) Int. Cl.: G02B 27/28, G02B 27/01, G02B 27/14, H04N 9/31

(54) **IMAGE GENERATION APPARATUS, DISPLAY DEVICE AND VEHICLE**
BILDERZEUGUNGSVORRICHTUNG, ANZEIGEVORRICHTUNG UND FAHRZEUG
APPAREIL DE GÉNÉRATION D'IMAGE, DISPOSITIF D'AFFICHAGE ET VÉHICULE

(30) Priority: 09.12.2021 CN 202111501647
(43) Date of publication of application: 18.09.2024
(73) Proprietor: Shenzhen Yinwang Intelligent Technologies Co., Ltd., Shenzhen, Guangdong 518129 (CN)
(72) Inventor: CHEN, Yanzhe, Shenzhen, Guangdong 518129 (CN); FANG, Yuanrong, Shenzhen, Guangdong 518129 (CN); FANG, Zhifang, Shenzhen, Guangdong 518129 (CN)
(74) Representative: Pfenning, Meinig & Partner mbB
(86) International application number: PCT/CN2022/117170
(87) International publication number: WO 2023/103492

(56) References cited:
- CN-A- 101 697 036
- CN-A- 105 824 177
- CN-A- 105 824 177
- CN-A- 106 062 629
- CN-A- 113 406 795
- JP-A- H09 127 461
- US-A1- 2013 286 357
- US-A1- 2019 391 476
- US-A1- 2021 333 545

## Description

### TECHNICAL FIELD

Embodiments of this application relate to the picture display field, and in particular, to a picture generation apparatus, a display device, and a vehicle.

### BACKGROUND

CN 105 824 177 A describes a liquid crystal liquid crystal projection system.

US 2021/333545 A1 describes a head-up display apparatus.

In a projection display technology, a display may be a reflective device. A display device projects an imaging light onto the reflective device like glass. The reflective device reflects the imaging light to human eyes, to implement projection of the imaging light to human eyes.

During projection of a panchromatic imaging light from inside the display device to human eyes, because different colored lights have different wavelength ranges, display effect of the different colored lights is different, and imaging effect is affected. For example, parameters such as light intensity and contrast of a part of colored lights in the imaging light are greatly different from those of other colored lights. This results in uneven color rendering, and a like phenomenon.

### SUMMARY

Embodiments of this application provide a picture generation apparatus, a display device, and a vehicle according to the independent claims, to improve color rendering evenness and imaging effect of a picture on a reflective device.

According to a first aspect, an embodiment of this application provides a picture generation apparatus. The picture generation apparatus includes a light source, a beam splitter, a spatial light modulator, and a polarization conversion unit. The light source is configured to provide a light beam. The beam splitting unit is configured to separate a linearly polarized polychromatic light from the light beam, and input the linearly polarized polychromatic light into the spatial light modulator. The spatial light modulator is configured to perform light modulation on the linearly polarized polychromatic light based on picture data, and input a modulated linearly polarized polychromatic light into the polarization conversion unit. The polarization conversion unit is configured to convert a polarization direction of a first colored light in the modulated linearly polarized polychromatic light, and output an imaging light, where the imaging light includes the first colored light and a second colored light whose polarization directions are perpendicular to each other.

In this embodiment of this application, polarization directions of colored lights in the linearly polarized polychromatic light separated by the beam splitting unit are the same. The polarization conversion unit converts the polarization direction of the first colored light in the linearly polarized polychromatic light, so that the polarization directions of the first colored light and the second colored light in the imaging light are perpendicular to each other. Therefore, different operations may be performed on the first colored light and the second colored light based on the polarization directions or the first colored light and the second colored light pass through different light paths, to avoid poor display effect of the first colored light or the second colored light caused by performing a same operation or passing through a same light path. This improves the display effect of the first colored light or the second colored light, and improves color rendering evenness and imaging effect.

For example, in a vehicle-mounted HUD scenario, a coating in a windshield is used as a reflective device. The imaging light is incident to the windshield by using a P light, and is imaged in human eyes through reflection of the coating. However, some coatings have low reflectivity and high absorbance on a red P light. This results in low color rendering of a red light in imaging and uneven color rendering of the imaging. According to the picture generation apparatus provided in this embodiment of this application, a red light that is used as the first colored light is an S light, of the windshield, projected onto the windshield, and another colored light (the second colored light) is a P light projected onto the windshield. Based on different properties of the P light and the S light, the red light (the first colored light) is reflected on two boundary planes of the windshield and the air, and the another colored light (the second colored light) is reflected on the coating in the windshield. This avoids a light intensity defect of the red light caused by reflection of the red light on the coating, and improves color rendering evenness of the imaging.

In an optional implementation, the polarization conversion unit includes a retarder stack filter (retarder stack filter, RSF). The RSF is configured to rotate the polarization direction of the first colored light by 90°.

The RSF changes a polarization status of the first colored light through a phase delay, and has a low loss to the first colored light and other colored lights in a polychromatic light source. Therefore, the RSF is a passive low-loss optical device. Therefore, the RSF converts the polarization direction of the first colored light, and a degree that light intensity of the first colored light and the other colored lights in the polychromatic light source are weakened is low, thereby ensuring brightness and the color rendering evenness of the imaging, and improving display effect of the imaging.

It should be noted that, it is a most desirable status that the polarization directions of the first colored light and the second colored light are perpendicular to each other. If the polarization directions of the first colored light and the second colored light cannot be perpendicular due to problems such as a process, a tolerance, and a material, and there is an included angle close to 90° between the polarization directions of the first colored light and the second colored light, this also falls within the scope shown in embodiments of this application. This is not limited herein.

In an optional implementation, the first colored light is a red light, and the second colored light is a blue light and/or a green light.

In an optional implementation, the first colored light is a blue light and/or a green light, and the second colored light is a red light.

Due to a wavelength range to which the red light belongs, the red light passes through a same light path, modulation, and the like as the blue light and/or the green light does, and a status presented by the red light is greatly different from a status presented by the blue light and/or the green light. Therefore, in this embodiment of this application, a polarization direction of the red light is different from a polarization direction of the blue light and/or the green light. This reduces a difference between a final imaging status of the red light and a final imaging status of a blue-green light.

In an optional implementation, a polarization direction of a red light in the modulated linearly polarized polychromatic light is parallel to a horizontal axis of an analog picture coordinate system of the spatial light modulator; and a polarization direction of a blue light and/or a green light in the modulated linearly polarized polychromatic light is perpendicular to the horizontal axis.

In an optional implementation, the beam splitting unit includes a polarization beam splitter (polarization beam splitter, PBS), and the polarization beam splitter is configured to guide the linearly polarized polychromatic light to the spatial light modulator. In addition, the linearly polarized polychromatic light is a P light. The spatial light modulator is configured to perform light modulation on the linearly polarized polychromatic light based on the picture data, where the modulated linearly polarized polychromatic light is an S light. The polarization beam splitter is further configured to guide the modulated linearly polarized polychromatic light to the polarization conversion unit.

It should be noted that, herein, an incident plane of the linearly polarized polychromatic light incident to the polarization beam splitter is used as a reference to determine whether the linearly polarized polychromatic light before and after modulation is a P light or an S light.

The beam splitting unit is not only configured to separate the linearly polarized polychromatic light, but is also configured to guide the linearly polarized polychromatic light before and after modulation. The two functions are implemented on a same unit. This makes a structure more compact, and therefore reduces a size of an entire picture generation unit.

In an optional implementation, the beam splitting unit further includes a polarizer. The polarizer is located on a light path between the light source and the polarization beam splitter. The polarizer is configured to separate the P light from the light beam to obtain the linearly polarized polychromatic light.

Optionally, the polarizer may include a polaroid. Because the light separated by the polarizer has a single polarization direction, a linearly polarized polychromatic light with a pure polarization direction may be obtained. Therefore, the polarizer separates the linearly polarized polychromatic light, so that singularity of a polarization direction of the linearly polarized polychromatic light may be ensured, and a polarization direction of a light on a subsequent light path may be precisely controlled.

In an optional implementation, an incident plane of the windshield is used as a reference for the P light and the S light.

In this embodiment of this application, the light beam provided by the light source may be a natural light, a circularly polarized light, or an elliptically polarized light. This is not limited herein. If the light beam provided by the light source is a natural light, the beam splitting unit may separate the linearly polarized polychromatic light from the natural light; or if the light beam provided by the light source is a circularly polarized light or an elliptically polarized light, the beam splitting unit may convert a polarization direction of the light beam to obtain the linearly polarized polychromatic light.

In an optional implementation, the beam splitting unit includes a polarization beam splitter. The polarization beam splitter is configured to guide the linearly polarized polychromatic light to the spatial light modulator. In addition, the linearly polarized polychromatic light is an S light. The spatial light modulator is configured to perform light modulation on the linearly polarized polychromatic light based on the picture data, where the modulated linearly polarized polychromatic light is a P light. The polarization beam splitter is further configured to guide the modulated linearly polarized polychromatic light to the polarization conversion unit.

The beam splitting unit is not only configured to separate the linearly polarized polychromatic light, but is also configured to guide the linearly polarized polychromatic light before and after modulation. The two functions are implemented on a same unit. This makes a structure more compact, and therefore reduces a size of the entire picture generation unit.

In an optional implementation, the beam splitting unit further includes a polarizer. The polarizer is located on a light path between the light source and the polarization beam splitter. The polarizer is configured to separate an S light from the light beam to obtain the linearly polarized polychromatic light.

Optionally, the polarizer may include a polaroid. Because the light separated by the polarizer has a single polarization direction, a linearly polarized polychromatic light with a pure polarization direction may be obtained. Therefore, the polarizer separates the linearly polarized polychromatic light, so that singularity of a polarization direction of the linearly polarized polychromatic light may be ensured, and a polarization direction of a light on a subsequent light path may be precisely controlled.

In an optional implementation, the polarization beam splitter includes a wire grid and/or a polarization beam splitting prism.

In an optional implementation, the spatial light modulator is configured to: perform light modulation on the linearly polarized polychromatic light based on the picture data, and transmit the modulated linearly polarized polychromatic light.

When the spatial light modulator transmits the modulated linearly polarized polychromatic light, light path directions of the polarization light before and after modulation are both in an "extensive" direction pointing from the light source to the spatial light modulator. Therefore, the light does not reversely bend back to a direction pointing to the light source, and there is no requirement for a guiding light path caused by a light path reversion. A beam splitting device does not need to be disposed in the picture generation apparatus for guiding, so that a structure of the picture generation apparatus is simplified, and the size of the picture generation apparatus is reduced.

In an optional implementation, the beam splitting unit includes a polarizer, where the polarizer is configured to separate a P light or an S light from the light beam to obtain the linearly polarized polychromatic light.

In an optional implementation, the spatial light modulator includes at least one of a liquid crystal on silicon (liquid crystal on silicon, LCOS) chip, a liquid crystal display (liquid crystal display, LCD), an organic light-emitting diode (organic light-emitting diode, OLED), a micro-light-emitting diode (micro-light-emitting diode, micro-LED), a digital micromirror device (digital micromirror device, DMD), and a micro-electro-mechanical system (micro-electro-mechanical-system, MEMS).

According to a second aspect, which is not an embodiment of the present invention but helpful for understanding certain aspects thereof, a picture generation apparatus is provided. The picture generation apparatus includes a light source component and a spatial light modulator. The light source component is configured to output a first linearly polarized light and a second linearly polarized light whose polarization directions are perpendicular to each other. The first linearly polarized light and the second linearly polarized light are different colored lights. The spatial light modulator is configured to perform light modulation on the first linearly polarized light and the second linearly polarized light based on picture data, and output an imaging light. The imaging light includes a first colored light and a second colored light whose polarization directions are perpendicular to each other.

In this way, polarization directions of the first linearly polarized light and the second linearly polarized light that are output by the light source component are different, and the first linearly polarized light and the second linearly polarized light are different colored lights. Therefore, polarization directions of different colored lights in the imaging light are distinguished. For a scenario in which display effect of a part of colored lights is poor, polarization directions of the part of colored lights may be controlled, to improve the display effect of the part of colored lights, and improve color rendering evenness and imaging effect.

In an optional implementation, the light source component includes a first laser and a second laser. The first laser is configured to output the first linearly polarized light. The second laser is configured to output the second linearly polarized light.

A laser includes lasers of three primary colors: red, green, blue (red, green, blue, RGB). Different lasers may output different colored lights. In addition, the laser may directly obtain a colored light having a specific polarization direction. Therefore, the laser may replace devices such as a beam splitting unit and a polarization conversion unit to distinguish polarization directions of different colored lights, so that a structure of the picture generation apparatus is simpler, and a size of the picture generation apparatus may be reduced.

In an optional implementation, the light source component includes a light source, the beam splitting unit, and the polarization conversion unit. The light source is configured to provide a light beam. The beam splitting unit is configured to separate a linearly polarized polychromatic light from the light beam, and input the linearly polarized polychromatic light into the polarization conversion unit. The polarization conversion unit is configured to convert a polarization direction of a first colored light in the linearly polarized polychromatic light, and output the first linearly polarized light and the second linearly polarized light.

The beam splitting unit and the polarization conversion unit are integrated into the light source component, and lights emergent from the light source component are the first linearly polarized light and the second linearly polarized light whose polarization directions are perpendicular to each other and that belong to different colored lights. Therefore, outside the light source component, devices such as the beam splitting unit and the polarization conversion unit do not need to be disposed to adjust a polarization direction. This simplifies a structure outside the light source component of the picture generation apparatus. In addition, because the light beam in the light source component has not undergone diffusion processing, a projection range of the light beam is small. The beam splitting unit and the polarization conversion unit are disposed in the light source component, so that a size of the beam splitting unit and the polarization conversion unit, a distance between the beam splitting unit and the polarization conversion unit, and the like may be reduced, thereby reducing the size of the entire picture generation apparatus.

In an optional implementation, the polarization conversion unit includes a retarder stack filter RSF. The RSF is configured to rotate the polarization direction of the first colored light by 90°.

In an optional implementation, the first linearly polarized light includes a red light, and the second linearly polarized light includes a blue light and/or a green light.

In an optional implementation, the first linearly polarized light includes a blue light and/or a green light, and the second linearly polarized light includes a red light.

In an optional implementation, a polarization direction of a red light in the imaging light is parallel to a horizontal axis of an analog picture coordinate system of the spatial light modulator; and a polarization direction of a blue light and/or a green light in the imaging light is perpendicular to the horizontal axis.

In an optional implementation, the spatial light modulator includes at least one of a digital micromirror device DMD, a micro-electro-mechanical system MEMS, a liquid crystal on silicon LCOS, a liquid crystal display LCD, an organic light-emitting diode OLED, and a micro-light-emitting diode micro-LED.

For advantageous effects of some implementations of the second aspect, refer to the first aspect. Details are not described herein again.

According to a third aspect, which is not an embodiment of the present invention but helpful for understanding certain aspects thereof, a picture generation apparatus is provided. The picture generation apparatus includes a picture output unit, a beam splitting unit, and a polarization conversion unit. The picture output unit is configured to output a polychromatic imaging light based on picture data. The beam splitting unit is configured to separate a linearly polarized polychromatic light from the polychromatic imaging light. The polarization conversion unit is configured to convert a polarization direction of a first colored light in the linearly polarized polychromatic light, and output an imaging light.

In an optional implementation, the polarization conversion unit includes a retarder stack filter RSF. The RSF is configured to rotate the polarization direction of the first colored light by 90°.

In an optional implementation, the imaging light includes the first colored light and a second colored light whose polarization directions are perpendicular to each other.

In an optional implementation, the first colored light is a red light, and the second colored light is a blue light and/or a green light.

In an optional implementation, the first colored light is a blue light and/or a green light, and the second colored light is a red light.

In an optional implementation, a polarization direction of a red light in the polychromatic imaging light is parallel to a horizontal axis of an analog picture coordinate system of the picture output unit; and a polarization direction of a blue light and/or a green light in the polychromatic imaging light is perpendicular to the horizontal axis.

In an optional implementation, the beam splitting unit includes a polarizer. The polarizer is located on a light path between the picture output unit and the polarization conversion unit. The polarizer is configured to separate a P light or an S light from the polychromatic imaging light to obtain the linearly polarized polychromatic light.

In an optional implementation, the spatial light modulator includes an organic light-emitting diode OLED or a micro-light-emitting diode micro-LED.

For advantageous effects of the third aspect, refer to the first aspect. Details are not described herein again.

According to a fourth aspect, an embodiment of this application provides a display device. The display device includes a host central processing unit and the picture generation apparatus according to the first aspect. The host central processing unit is configured to send picture data to a spatial light modulator or a picture output unit.

In an optional implementation, the display device further includes a reflective device. The reflective device is configured to perform reflective imaging on an imaging light projected by the picture generation apparatus.

According to a fifth aspect, an example provides a display device. The display device includes the picture generation apparatus according to the first aspect. The picture generation apparatus is configured to project an imaging light onto a windshield.

According to a sixth aspect, an embodiment of this application provides a transportation means. The transportation means includes the display device according to the fourth aspect and a windshield.

In an optional implementation, the first colored light in the imaging light is a red light. In addition, the first colored light is an S light projected onto the windshield.

In an optional implementation, the first colored light in the imaging light is a blue light and/or a green light. In addition, the first colored light is a P light projected onto the windshield.

For advantageous effects of the fourth aspect to the sixth aspect, refer to the first aspect to the third aspect. Details are not described herein again.

According to a seventh aspect, an example provides a picture projection method. The method includes: obtaining picture data; separating a linearly polarized polychromatic light from a light beam; performing light modulation on the linearly polarized polychromatic light based on the picture data to obtain a modulated linearly polarized polychromatic light; and converting a polarization direction of a first colored light in the modulated linearly polarized polychromatic light to obtain an imaging light. The imaging light includes the first colored light and a second colored light whose polarization directions are perpendicular to each other.

In an optional implementation, the first colored light includes a red light, and the second colored light includes a blue light and/or a green light.

In an optional implementation, the first colored light includes a blue light and/or a green light, and the second colored light includes a red light.

For advantageous effects of the seventh aspect, refer to the first aspect. Details are not described herein again.

According to an eighth aspect, which is not an embodiment of the present invention but helpful for understanding certain aspects thereof, a picture projection method is provided. The method includes: obtaining picture data; obtaining a first linearly polarized light and a second linearly polarized light whose polarization directions are perpendicular to each other, where the first linearly polarized light and the second linearly polarized light are different colored lights; and performing light modulation on the first linearly polarized light and the second linearly polarized light based on the picture data to obtain an imaging light.

In an optional implementation, an action of obtaining the first linearly polarized light and the second linearly polarized light whose polarization directions are perpendicular to each other may specifically include: obtaining a light beam; separating a linearly polarized polychromatic light from the light beam; and converting a polarization direction of a second target linearly polarized light to obtain the first linearly polarized light and the second linearly polarized light. The second target linearly polarized light is a first colored light in the linearly polarized polychromatic light.

For advantageous effects of the eighth aspect, refer to the second aspect. Details are not described herein again.

### BRIEF DESCRIPTION OF DRAWINGS

FIG. 1a is a schematic diagram of an application scenario according to an embodiment of this application;
FIG. 1b is another schematic diagram of an application scenario according to an embodiment of this application;
FIG. 1c is another schematic diagram of an application scenario according to an embodiment of this application;
FIG. 2 is a schematic diagram of a structure of a picture generation apparatus according to an embodiment of this application;
FIG. 3 is a schematic diagram of a polarization direction of a light of a picture generation apparatus according to an embodiment of this application;
FIG. 4 is a schematic diagram of an imaging light of a picture generation apparatus in a ghosting elimination scenario according to an embodiment of this application;
FIG. 5 is another schematic diagram of a structure of a picture generation apparatus according to an embodiment of this application;
FIG. 6 is another schematic diagram of a structure of a picture generation apparatus according to an embodiment of this application;
FIG. 7 is another schematic diagram of a structure of a picture generation apparatus according to an embodiment of this application;
FIG. 8 is another schematic diagram of a structure of a picture generation apparatus according to an embodiment of this application;
FIG. 9 is a schematic diagram of a structure of another picture generation apparatus according to an embodiment of this application;
FIG. 10 is a schematic diagram of a polarization direction of a light of another picture generation apparatus according to an embodiment of this application;
FIG. 11 is a schematic diagram of a polarization direction of a light of another picture generation apparatus according to an embodiment of this application;
FIG. 12 is a schematic diagram of a structure of another picture generation apparatus according to an example, which is not an embodiment of the present invention but helpful for understanding certain aspects thereof;
FIG. 13 is a schematic diagram of a structure of another picture generation apparatus according to an example, which is not an embodiment of the present invention but helpful for understanding certain aspects thereof;
FIG. 14 is a schematic diagram of a structure of an HUD of a picture generation apparatus according to an embodiment of this application;
FIG. 15 is a flowchart of a picture projection method according to an embodiment of this application;
FIG. 16 is another flowchart of a picture projection method according to an example, which is not an embodiment of the present invention but helpful for understanding certain aspects thereof;
FIG. 17 is a schematic diagram of a circuit of a display device according to an embodiment of this application; and
FIG. 18 is a schematic diagram of a functional framework of a transportation means according to an embodiment of this application.

### DESCRIPTION OF EMBODIMENTS

First, technical terms that may appear in embodiments of this application are explained.

Ghosting: Two non-overlapping pictures are presented in a same region. Consequently, there is a specific offset distance between imaging results, and boundaries between content in the imaging results are blurred. This affects identification of the content in the imaging results.

P-polarized light and S-polarized light: When a light penetrates a surface of an optical element (like a beam splitting mirror or a reflective device) at a non-vertical angle, both reflection and transmission characteristics depend on a polarization phenomenon. If a polarization direction of the light is on an incident plane, the light is referred to as a P-polarized light (P light for short). If the polarization direction of the light is perpendicular to the incident plane, the light is referred to as an S-polarized light (S light for short).

Brewster window: an angle range of 50° to 65°. When the light is projected to the reflective device at an incident angle within the Brewster window range, reflectivity of the P light is almost 0.

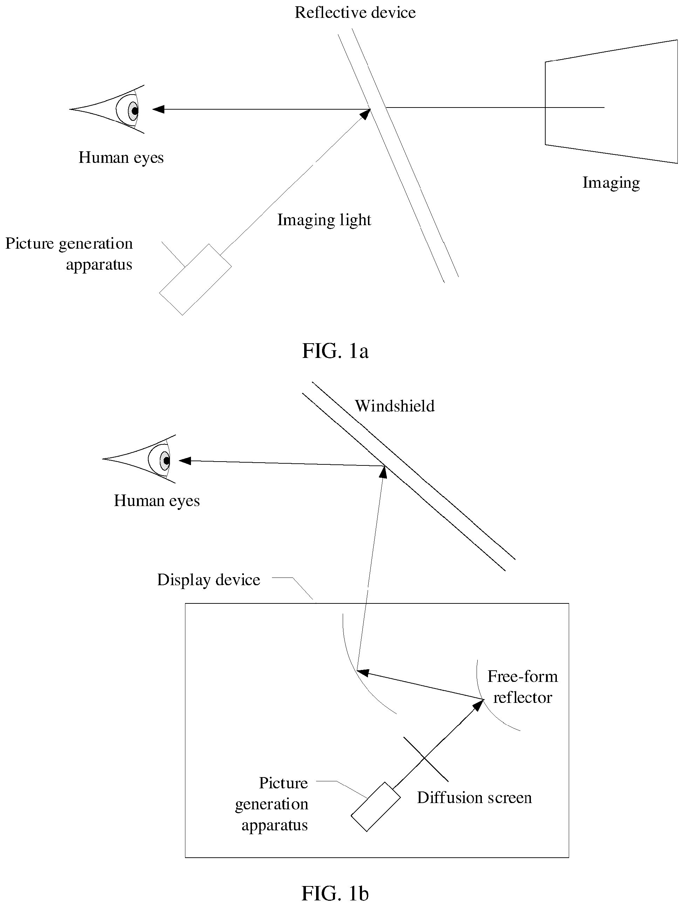

The following describes application scenarios of a picture generation apparatus provided in this embodiment of this application. The picture generation apparatus in this embodiment of this application is used in a projection display scenario. As shown in FIG. 1a, the picture generation apparatus projects an imaging light onto a reflective device. The reflective device reflects the imaging light to human eyes, to present imaging on human eyes.

It should be noted that, in addition to being imaged on human eyes, imaging may further be performed on another subject. For example, imaging may be performed on a picture receiving plane of a sensor, a test device, an intelligent learning device, or the like, to implement detection, debugging, training, and the like of a corresponding device. This is not limited herein.

The scenario is further refined. The picture generation apparatus may be used in scenarios such as a head-up display (head-up display, HUD) scenario and a desktop display scenario.

As shown in FIG. 1b, in the head-up display HUD scenario, the reflective device is a windshield. A picture generation apparatus of a display device outputs the imaging light. The imaging light passes through optical devices such as a diffusion screen and a free-form reflector (which is briefly referred to as a free-form mirror), and is projected onto the windshield. The windshield reflects the imaging light to human eyes, and presents the imaging on human eyes.

It should be noted that the windshield is merely an example of the reflective device. In addition to glass, the reflective device may also be made of another material. This is not limited herein.

In the head-up display scenario, the picture generation apparatus may be a picture generation unit (picture generation unit, PGU), and the display device may be an HUD. The HUD may be used in a transportation means like a vehicle or an airplane. In addition, the HUD may be further used in a scenario like a central control room scenario, a building landscape scenario, or an advertisement placement scenario. This is not limited herein. In scenarios other than the transportation means, a main function of the windshield in FIG. 1b is to reflect the imaging light. Therefore, a type of the reflective device in the scenarios is not limited.

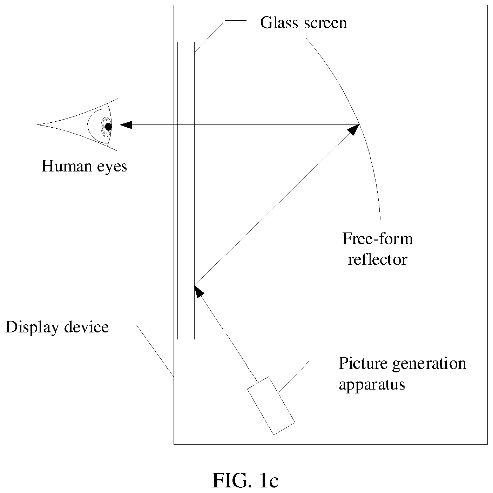

As shown in FIG. 1c, in the desktop display scenario, the picture generation apparatus of the display device outputs the imaging light. The imaging light is reflected by a glass screen and the free-form reflector, and is projected to human eyes through the glass screen, to present the imaging on human eyes.

During specific application, the imaging light output by the picture generation apparatus generally includes lights of three primary colors: red, green, blue (red, green, blue, RGB). Because wavelength ranges of a red light (an R light), a green light (a G light), and a blue light (a B light) are different, after passing through a same light path, modulation, and the like, different colored lights may present different display effect. This affects final imaging effect.

For example, in the HUD scenario shown in FIG. 1b, the imaging light is reflected to human eyes through the windshield. Because there are two boundary planes (front and rear planes) between the windshield and the air, the imaging light is reflected on both boundary planes, and two imaging results are presented on human eyes. Because the windshield has a specific thickness, there is a specific offset distance between the two imaging results. Consequently, ghosting appears on imaging seen by human eyes, and identification of content in the imaging is affected.

In the desktop display scenario shown in FIG. 1c, because there are also two boundary planes between the glass screen and the air, a ghosting problem also occurs.

In a ghosting elimination solution, a coating is applied in the windshield, so that the imaging light is incident to the windshield in a P light state, and the imaging light is incident to the windshield at an angle within a Brewster window range. The imaging light is reflected through the coating in the windshield, and there is no reflection on the two boundary planes between the windshield and the air. That is, a driver sees a single-layer imaging light reflected by the coating in the windshield. This reduces a ghosting phenomenon.

However, reflectivity of the red light in the P light state on the coating is not high. Consequently, intensity of a red light in the imaging is low. This results in unevenness color rendering of the imaging, and affects imaging effect.

To resolve the foregoing problem that imaging effect is poor due to different colored lights with different wavelengths, embodiments of this application provide a picture generation apparatus, a display device, a transportation means, and a picture projection method. Different colored lights in an imaging light have different polarization directions, so that a display defect of a part of colored lights is alleviated, thereby improving overall imaging effect.

In embodiments of this application, the picture generation apparatus is also referred to as a picture generation unit (picture generation unit, PGU).

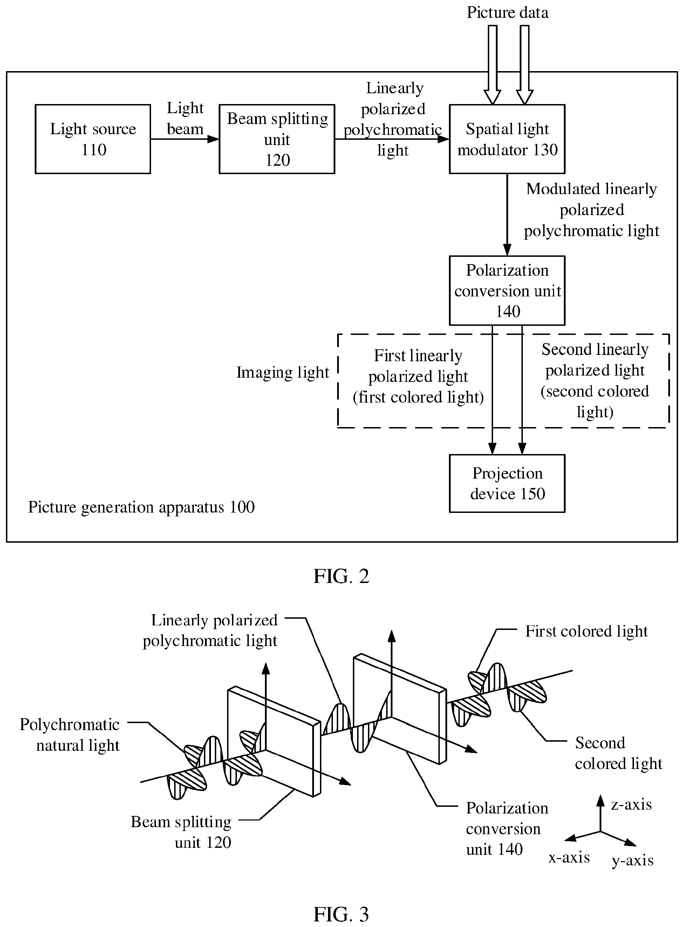

FIG. 2 is a schematic diagram of a structure of a picture generation apparatus according to an embodiment of this application. The picture generation apparatus 100 includes a light source 110, a beam splitting unit 120, a spatial light modulator 130, a polarization conversion unit 140, and a projection device 150.

The light source 110 is configured to provide a light beam (a parallel light beam). The beam splitting unit 120 is configured to separate a linearly polarized polychromatic light from the light beam, and input the linearly polarized polychromatic light into the spatial light modulating unit 130. The spatial light modulating unit 130 is configured to perform light modulation on the linearly polarized polychromatic light based on picture data, and input a modulated linearly polarized polychromatic light into the polarization conversion unit 140. The polarization conversion unit 140 is configured to convert a polarization direction of a first colored light in the modulated linearly polarized polychromatic light, and output an imaging light. The projection device 150 is configured to project the imaging light.

The polarization conversion unit 140 may convert a polarization direction of a light (the first colored light) of a specific band to obtain a first linearly polarized light. The polarization conversion unit 140 may not convert a polarization direction of a light (a second colored light) of a band other than the specific band. Therefore, a polarization direction of a light other than the first colored light in the imaging light remains unchanged, and the light is the second linearly polarized light.

Therefore, polarization directions of the first colored light and the second colored light included in the imaging light output by the picture generation apparatus 100 shown in FIG. 2 are different. For a scenario in which display effect of a part of colored lights is poor, polarization directions of the part of colored lights may be controlled, to improve the display effect of the part of colored lights, and improve color rendering evenness and imaging effect.

Optionally, the polarization conversion unit 140 may rotate the polarization direction of the first colored light by 90°, so that the polarization directions of the first colored light and the second colored light in the imaging light are perpendicular to each other. FIG. 3 is a schematic diagram of a polarization direction of a light of the picture generation apparatus 100. As shown in FIG. 3, the light beam provided by the light source is a polychromatic natural light, and has a plurality of polarization directions. The linearly polarized polychromatic light separated by the beam splitting unit 120 has only one polarization direction. After the polarization conversion unit 140 rotates the polarization direction of the first colored light by 90°, the obtained imaging light may include the first colored light and the second colored light whose polarization directions are perpendicular to each other.

It should be noted that a natural light is only an example of the light beam provided by the light source. In addition to the natural light, the light source may further provide another type of light beam like a circularly polarized light or an elliptically polarized light. This is not limited herein.

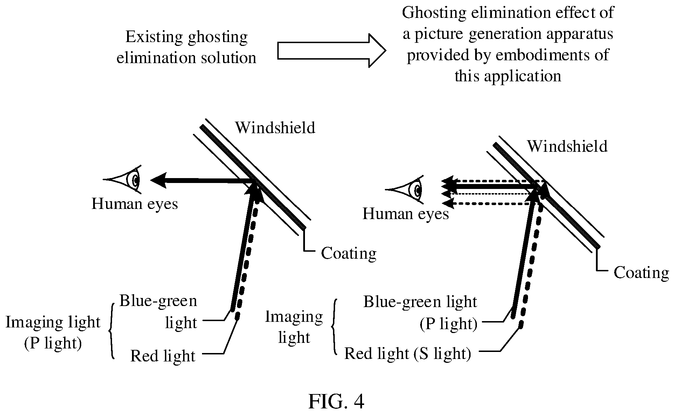

Optionally, as shown in FIG. 4, if the picture generation apparatus 100 is used in a ghosting elimination solution in an HUD scenario, the first colored light in the imaging light may be a red light, and the second colored light may be a blue light and a green light (blue-green light for short). The imaging light is incident to a windshield at an incident angle within a Brewster window range, and the blue-green light (the second colored light) is controlled to be incident to the windshield in a P light state. Because the polarization directions of the second colored light and the first colored light are perpendicular to each other, the first colored light is incident to the windshield in an S light state.

Because the blue-green light (the second colored light) is a P light relative to the windshield, the coating in the windshield is a main reflective plane of the blue-green light, and the blue-green light does not generate ghosting. Because the red light (the first colored light) is an S light relative to the windshield, two boundary planes of the windshield and the air are main reflective planes of the red light, and the red light may be reflected to human eyes through the two boundary planes. Because human eyes are not sensitive to brightness of the red light, ghosting caused by reflection of the red light on the two boundary planes has little impact on final imaging effect. In addition, the coating in the windshield reflects a very small amount of the red light. Because a red light picture reflected by the coating is between red light pictures reflected by the two boundary planes, an offset distance between imaging results of the red light is reduced. Therefore, ghosting in color rendering of the red light may be alleviated, and display effect of the red light may be improved.

In an existing ghosting elimination solution, the red light cannot be projected to human eyes for imaging. Consequently, the red light is lost in imaging, and color rendering evenness and display effect of final imaging are affected. However, according to the picture generation apparatus provided in this embodiment of this application, the red light may be projected to human eyes for imaging, to improve the color rendering evenness and the display effect of the final imaging.

It should be noted that the foregoing limitation on the first colored light and the second colored light is merely an example. To achieve ghosting elimination effect, the blue-green light incident to the windshield is a P light, and the red light is an S light. Therefore, alternatively, the first colored light may be a blue-green light, and the second colored light may be a red light; and the first colored light (the blue-green light) is controlled to be incident to the windshield in the P light state. This is not limited herein.

The foregoing describes applications of the picture generation apparatus provided in embodiments of this application by using examples. The following describes a specific structure in detail.

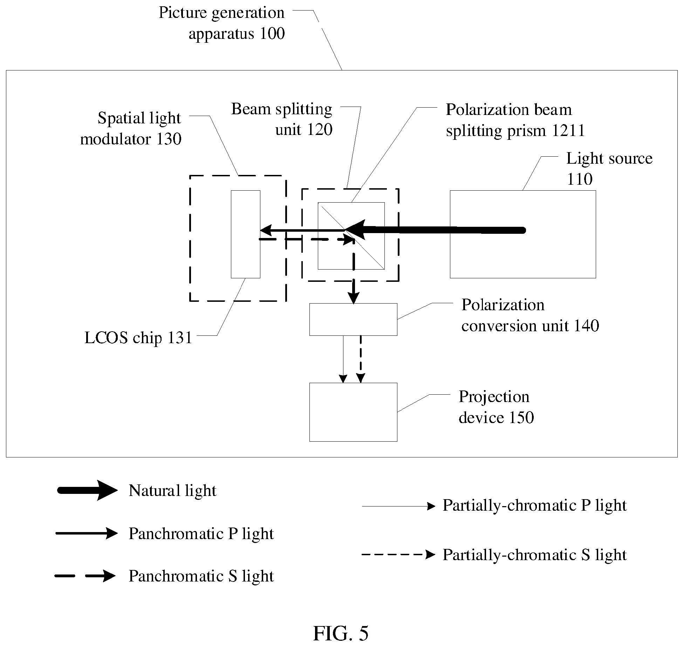

FIG. 5 shows a structure of a picture generation apparatus according to an embodiment of this application. FIG. 5 is a top view of the structure. In the structure, a beam splitting unit 120 may include a polarization beam splitting prism 1211, and a spatial light modulator 130 may include a liquid crystal on silicon LCOS 131.

A light source 110 is configured to provide a polychromatic natural light, and project the polychromatic natural light onto the polarization beam splitting prism 1211.

The polarization beam splitting prism 1211 includes a P-transmission and S-reflection film. The P-transmission and S-reflection film is used to transmit a P light whose polarization direction is on an incident plane (the polychromatic natural light is incident to an incident plane of the beam splitting unit 120, namely, a paper plane in FIG. 5) in the polychromatic natural light, to obtain a linearly polarized polychromatic light. The transmitted linearly polarized polychromatic light is projected onto the LCOS 131.

The LCOS 131 is configured to perform light modulation on the linearly polarized polychromatic light based on picture data. According to an LCOS principle, propagation directions of the linearly polarized polychromatic light before and after modulation are opposite, and polarization directions differ by 90°. Therefore, a modulated linearly polarized polychromatic light projected onto the polarization beam splitting prism 1211 is an S light whose incident direction is perpendicular to the incident plane (where the modulated linearly polarized polychromatic light is incident to the incident plane of the beam splitting unit 120, namely, the paper plane in FIG. 5).

The polarization beam splitting prism 1211 is configured to reflect the modulated linearly polarized polychromatic light, to input the modulated linearly polarized polychromatic light into a polarization conversion unit 140.

The polarization conversion unit 140 is configured to convert a polarization direction of a light of a specific band in the modulated linearly polarized polychromatic light to obtain an imaging light. The light of the specific band is also referred to as a first colored light.

A projection device 150 is configured to project the imaging light.

Optionally, in addition to a natural light, a light source provided by the light source 110 may be an elliptically polarized light, a circularly polarized light, or the like. This is not limited herein.

Optionally, in addition to the polarization beam splitting prism 1211, the beam splitting unit may further include another polarization beam splitter, for example, a wire grid 1212. This is not limited herein.

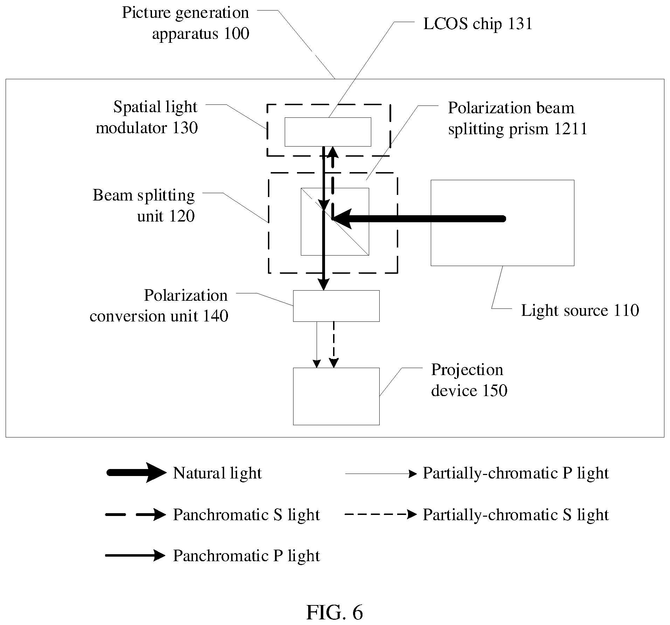

Optionally, the polarization beam splitting prism may alternatively include an S-transmission and P-reflection film. In the case, the linearly polarized polychromatic light incident to the LCOS 131 is an S light relative to the polarization beam splitting prism 1211, and the modulated linearly polarized polychromatic light is a P light relative to the polarization beam splitting prism 1211. A corresponding structure is shown in FIG. 6. Other structures in FIG. 6 correspond to those in FIG. 5. Details are not described herein again.

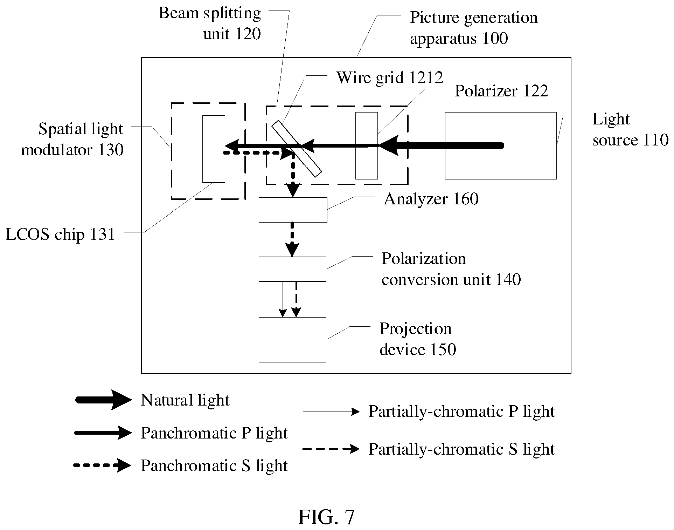

Optionally, as shown in FIG. 7, the beam splitting unit 120 may further include a polarizer 122. The polarizer 122 is configured to separate the linearly polarized polychromatic light from the light beam provided by the light source 110. If the light beam provided by the light source 110 is a natural light, the polarizer 122 may directly separate the linearly polarized polychromatic light from the natural light. If the light beam provided by the light source 110 is a circularly polarized light or an elliptically polarized light, the polarizer 122 may convert the circularly polarized light or the elliptically polarized light into the linearly polarized polychromatic light.

In a structure including the polarizer 122, a polarization beam splitter 121 (the polarization beam splitting prism 1211 in FIG. 5 and FIG. 6 and the wire grid 1212 in FIG. 7) may be configured to guide the linearly polarized polychromatic light before and after modulation, that is, guide the light before modulation to the spatial light modulator 130, and guide the light after modulation to the polarization conversion unit 140 (in a case in which the light is incident to the projection device 150 after passing through the polarization conversion unit 140) or the projection device 150 (in a case in which the light is incident to the polarization conversion unit 140 after passing through the projection device 150).

Optionally, an analyzer 160 may be further included on a light path between the polarization beam splitter and the polarization conversion unit 140. The analyzer 160 is configured to screen the modulated linearly polarized polychromatic light, so that a polarization direction of the light incident to the polarization conversion unit 140 is purer.

Optionally, the polarization conversion unit 140 may include a retarder stack filter RSF.

Optionally, the projection device 150 may alternatively be on a light path between the beam splitting unit 120 and the polarization conversion unit 140. This is not limited herein. If the projection device 150 is a lens, an RSF film may be attached to an incident plane or an emergent plane of the lens.

In this embodiment of this application, because an imaging light emergent from the polarization conversion unit 140 has two polarization directions, guiding the imaging light based on different polarization directions increases structural complexity. Therefore, in the structure shown in FIG. 5 to FIG. 7, the polarization conversion unit 140 is placed on a light path after the modulated linearly polarized polychromatic light is emergent to the polarization beam splitter. This may simplify the structure and reduce a size of the picture generation apparatus.

Optionally, the polarization conversion unit 140 may alternatively be placed on a light path of the linearly polarized polychromatic light emergent to the polarization beam splitter, or on a light path before the light path, for example, may be placed between the light source 110 and the beam splitting unit 120, or placed between the beam splitting unit 120 and the spatial light modulator 130. This is not limited herein.

Optionally, in addition to the LCOS 131, the spatial light modulator 130 may be another type of modulator, for example, a DMD or an MEMS.

In this embodiment, if the spatial light modulator does not change the polarization direction of the linearly polarized polychromatic light, the polarization conversion unit may be placed at any location on the light path of the picture generation apparatus. For example, the spatial light modulator 130 is placed on a light path between the light source 110 and the beam splitting unit 120, or on a light path between the beam splitting unit 120 and the spatial light modulator 130. This is not limited herein. The polarization conversion unit 140 is placed at any location on the light path, so that the structure of the picture generation apparatus is more flexible. In addition, if a surface processing technology of the light source 110, the beam splitting unit 120, or the spatial light modulator 130 is suitable for integrating the polarization conversion unit 140, placing the polarization conversion unit 140 at these locations may simplify a processing process and reduce the size of the picture generation apparatus.

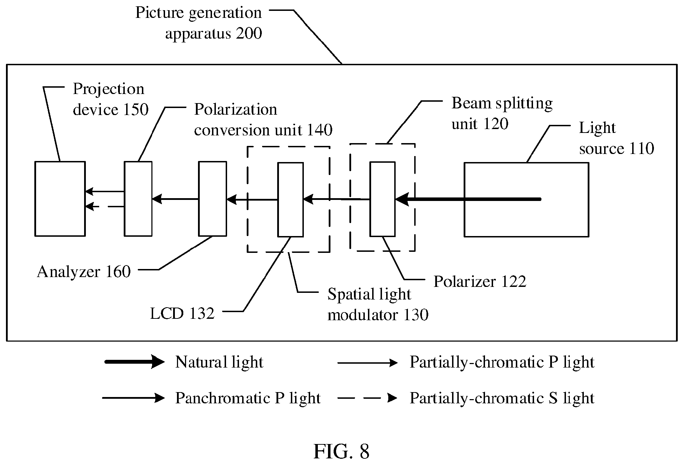

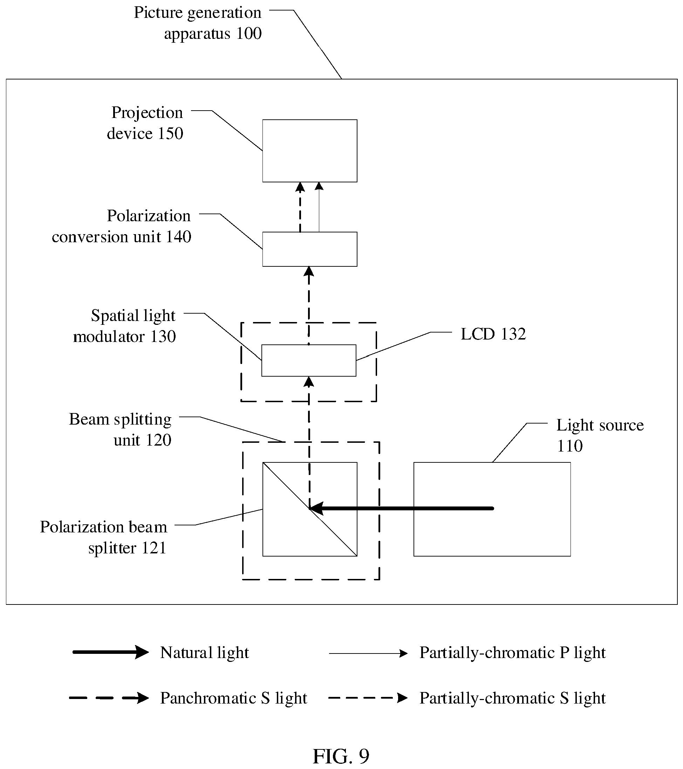

Optionally, the spatial light modulator 130 may include an LCD 132. The LCD 132 is configured to perform light modulation on the linearly polarized polychromatic light based on the picture data, and transmit the modulated linearly polarized polychromatic light. For a structure corresponding to this embodiment, refer to FIG. 8 and FIG. 9. For a function of a device other than the spatial light modulator 130 in FIG. 8 and FIG. 9, refer to descriptions in FIG. 5 to FIG. 7. Details are not described herein again.

Any structure shown in FIG. 2 or FIG. 5 to FIG. 9 may be used to eliminate ghosting. With reference to the descriptions in FIG. 4, it may be learned that when the imaging light is projected onto the windshield, the blue-green light is a P light relative to the windshield, and the red light is an S light relative to the windshield. The following uses a structure of a picture generation unit including an LCOS as an example to describe how to implement a projection relationship (a P light/an S light is projected onto the windshield) between colored lights in the imaging light and the windshield.

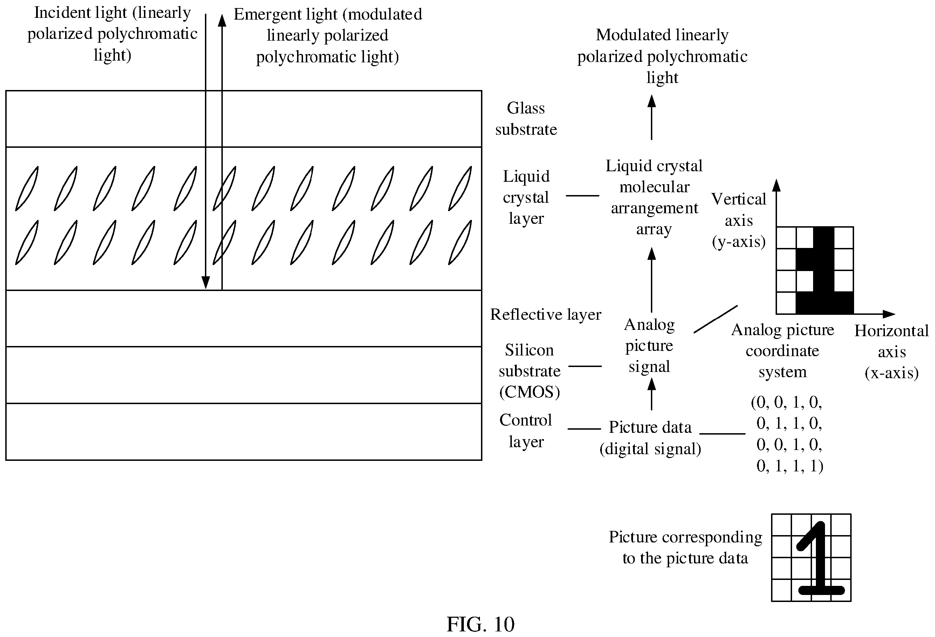

As shown in FIG. 10, an LCOS includes a control layer, a silicon substrate (silicon substrate), a reflective layer, a liquid crystal layer, and a glass substrate.

A process of modulating a linearly polarized polychromatic light by the LCOS is as follows:

The LCOS converts input picture data from a digital signal into an analog picture signal. The analog picture signal is a brightness status of each pixel in an analog picture coordinate system. Then, a voltage corresponding to the analog picture signal is loaded onto a liquid crystal pixel electrode on the silicon substrate CMOS, to control an arrangement status of liquid crystal molecules in the liquid crystal layer. The linearly polarized polychromatic light is projected onto the liquid crystal layer, and the picture data carried in the analog picture signal is loaded onto a reflected light based on refraction and reflection of a light by liquid crystal molecules in different polarization statuses, so that a modulated linearly polarized polychromatic light carries the picture data.

FIG. 10 is used as an example. It is assumed that 1 in the digital signal represents that a corresponding pixel status is bright, and 0 represents that a corresponding pixel status is dark. If a picture corresponding to the picture data is a pattern of the digit "1", a corresponding digital signal is shown in FIG. 10. The digital signal is converted into the analog picture signal, so that the brightness status of each pixel in the analog picture coordinate system may be obtained, and a pattern of the presented analog picture signal is close to the pattern of the digit "1" of the picture data.

Because the analog picture signal determines a pattern carried by an emergent light (namely, the modulated linearly polarized polychromatic light), the analog picture coordinate system is related to a direction of a picture finally projected by an imaging light onto a windshield.

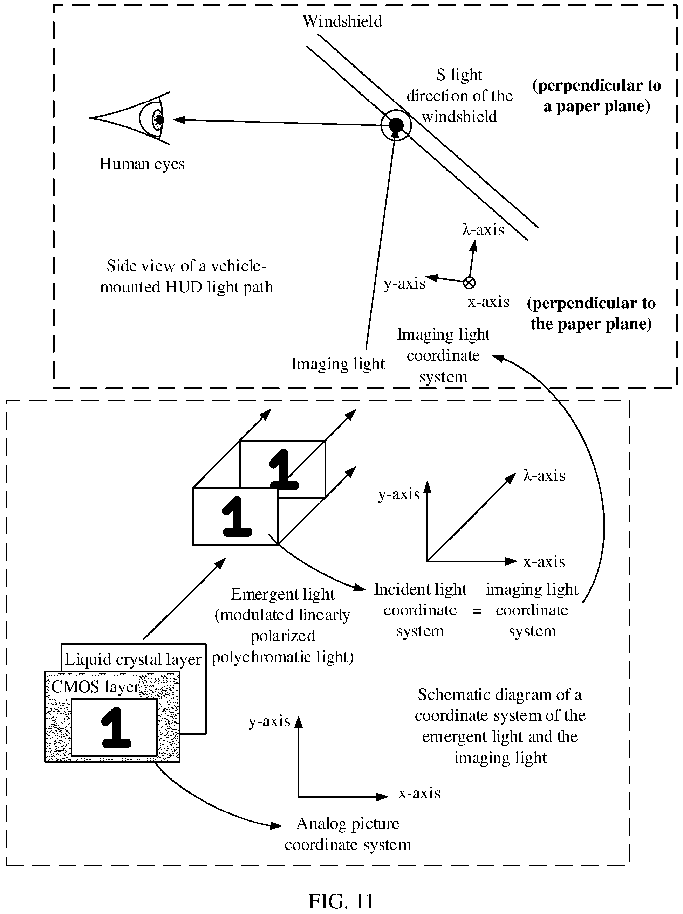

As shown in FIG. 11, in a schematic diagram of a coordinate system of the emergent light and the imaging light, it may be seen that a picture horizontal axis (an x-axis) of the analog picture coordinate system is an x-axis of an emergent light coordinate system, and a y-axis of the analog picture coordinate system also corresponds to a y-axis of the emergent light coordinate system. Because the light is not modulated on a subsequent light path of the emergent light, the emergent light coordinate system is an imaging light coordinate system. Therefore, the picture horizontal axis (the x-axis) of the analog picture coordinate system is also an x-axis of the imaging light coordinate system. Similarly, a picture vertical axis (the y-axis) of the analog picture coordinate system is a y-axis of the emergent light coordinate system, and is also a y-axis of the imaging light coordinate system. A λ-axis represents a propagation direction of the emergent light and the imaging light.

Relative to an incident plane of the windshield, a vibration direction of a P light is parallel to the incident plane, and a vibration direction of an S light is perpendicular to the incident plane. In a side view of a vehicle-mounted HUD light path in FIG. 11, an incident plane of the imaging light relative to the windshield is a paper plane of the side view. In addition, directions of the y-axis and the λ-axis of the imaging light coordinate system are parallel to the paper plane, and a direction of the x-axis is perpendicular to the paper plane. Therefore, the direction of the x-axis of the imaging light coordinate system is parallel to the vibration direction of the S light, and a y-λ plane of the imaging light coordinate system is parallel to the vibration direction of the P light.

Therefore, to make a red light an S light relative to the windshield and a blue-green light a P light relative to the windshield, a polarization direction of the red light is parallel to the x-axis of the imaging light coordinate system, that is, perpendicular to a paper plane direction of the side view; and a polarization direction of the blue-green light is perpendicular to the x-axis of the imaging light coordinate system, that is, parallel to the paper plane direction of the side view. It may be learned from the correspondence between the coordinate systems that in the picture generation apparatus, the polarization direction of the red light is parallel to the x-axis (namely, the picture horizontal axis shown in FIG. 10) of the analog picture coordinate system, and the polarization direction of the blue-green light is perpendicular to the x-axis of the analog picture coordinate system. That is, a polarization direction of a red light in the emergent light (the modulated linearly polarized polychromatic light) is parallel to the horizontal axis of the analog picture coordinate system; and a polarization direction of a blue-green light in the modulated linearly polarized polychromatic light is perpendicular to the horizontal axis of the analog picture coordinate system.

Generally, a horizontal axis direction of an analog picture coordinate system of a spatial light modulator is referred to as a long-side direction, and a vertical axis direction (namely, a direction perpendicular to the horizontal axis of the analog picture coordinate system) of the analog picture coordinate system is referred to as a short-side direction. The polarization directions of the colored lights may be represented as:
1. A polarization direction of a red light in an emergent light (namely, the modulated linearly polarized polychromatic light) of a spatial light modulator 130 is a long-side direction.
2. A polarization direction of a blue-green light in the emergent light (namely, the modulated linearly polarized polychromatic light) of the spatial light modulator 130 is a short-side direction.

Specifically, in the structures shown in FIG. 5 to FIG. 9, the polarization directions corresponding to the colored lights are shown as follows:

A polarization direction of a first colored light in the linearly polarized polychromatic light emergent from the spatial light modulator 130 is rotated by 90° at a polarization conversion unit 140. Therefore, a polarization direction of a second colored light is a polarization direction of the emergent light of the spatial light modulator 130 (namely, a polarization direction of the modulated linearly polarized polychromatic light).
1. The first colored light is a red light, and the second colored light is a blue-green light.

If the first colored light is a red light, the second colored light is a blue-green light. It may be learned from the foregoing descriptions that the polarization direction of the blue-green light is a short-side direction. Therefore, the polarization direction of the emergent light (namely, the modulated linearly polarized polychromatic light) of the spatial light modulator 130 is a short-side direction.

In the structures in FIG. 5, FIG. 7, and FIG. 9, the emergent light is a panchromatic S light relative to the beam splitting unit 120. Because the polarization direction of the emergent light is a short-side direction, a polarization direction of the panchromatic S light is a short-side direction. Because the polarization direction of the panchromatic S light is perpendicular to a paper plane on which a top view is located (FIG. 5 to FIG. 9 are all top views of structures, and the paper plane is also an incident plane of the beam splitting unit), the short-side direction is perpendicular to the paper plane. That is, in the structures in FIG. 5, FIG. 7, and FIG. 9, a vertical axis direction of an analog picture coordinate system of the spatial light modulator 130 is perpendicular to the paper plane, and a horizontal axis direction is parallel to the paper plane.

In the structure in FIG. 6 and FIG. 8, the emergent light is a panchromatic P light relative to the beam splitting unit 120. Because the polarization direction of the emergent light is a short-side direction, a polarization direction of the panchromatic P light is a short-side direction. Because the polarization direction of the panchromatic P light is parallel to the paper plane on which the top view is located (FIG. 5 to FIG. 9 are all top views of the structures, and the paper plane is also the incident plane of the beam splitting unit), the short-side direction is parallel to the paper plane. That is, in the structure in FIG. 6 and FIG. 8, the vertical axis direction of the analog picture coordinate system of the spatial light modulator 130 is parallel to the paper plane, and the horizontal axis direction is perpendicular to the paper plane.

2. The first colored light is a blue-green light, and the second colored light is a red light.

It may be learned from the foregoing analysis that in a case in which the first colored light is a blue-green light and the second colored light is a red light, in the structures in FIG. 5, FIG. 7, and FIG. 9, the horizontal axis direction of the analog picture coordinate system of the spatial light modulator 130 is perpendicular to the paper plane, and the vertical axis direction is parallel to the paper plane. In the structure in FIG. 6 and FIG. 8, the horizontal axis direction of the analog picture coordinate system of the spatial light modulator 130 is parallel to the paper plane, and the vertical axis direction is perpendicular to the paper plane. For a specific analysis process, refer to the analysis process of a case in which the first colored light is a red light and the second colored light is a blue-green light. Details are not described herein again.

It should be noted that the foregoing limitation on the polarization directions of the red light and the blue-green light is a desirable status of the polarization directions of the colored lights. Actually in the picture generation apparatus, potential geometric tolerances of devices, potential fitting tolerances during device assembly, or any other potential error may cause a matching failure of the polarization directions of the colored lights with the foregoing direction correspondences, and therefore result in specific deviations in directions. These cases also fall within the protection scope of embodiments of this application. This is not limited herein.

In addition to the foregoing structures, an embodiment of this application further provides another structure. The another structure is configured to obtain an imaging light that has different colored lights with different polarization directions. The following uses several typical structures as examples.

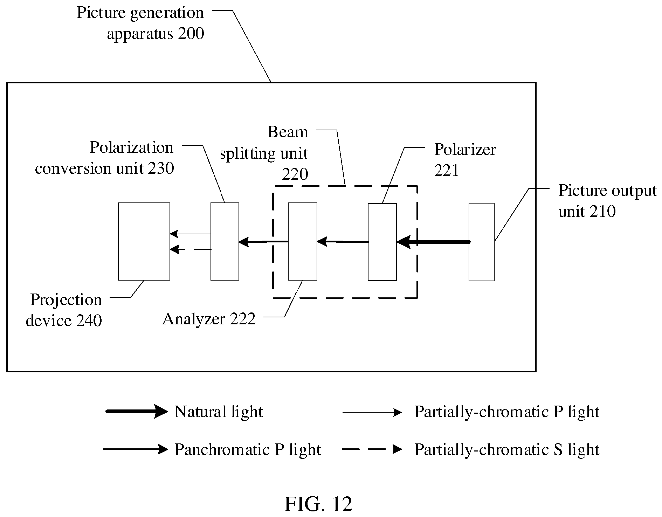

Refer to FIG. 12. A picture generation apparatus 200 according to an example, which is not an embodiment of the present invention but helpful for understanding certain aspects thereof, includes a picture output unit 210, a beam splitting unit 220, a polarization conversion unit 230, and a projection device 240.

The picture output unit 210 is configured to output a polychromatic imaging light based on picture data. The beam splitting unit 220 is configured to separate a linearly polarized polychromatic light from the polychromatic imaging light. The polarization conversion unit 230 is configured to convert a polarization direction of a first colored light in the linearly polarized polychromatic light, and output an imaging light. The projection device 240 is configured to project the imaging light. The imaging light includes the first colored light and a second colored light whose polarization directions are perpendicular to each other.

Optionally, the picture output unit 210 may include an OLED. In addition, another display like a micro-LED may be further included. This is not limited herein.

Optionally, the beam splitting unit 220 may include a polarizer 221 and an analyzer 222. The polarizer 221 is configured to separate the polychromatic imaging light, and the analyzer 222 is configured to screen the polychromatic imaging light. For a function of the analyzer 222, refer to the descriptions of the analyzer 160 in FIG. 7. Details are not described herein again.

For the polarization conversion unit 230, refer to the descriptions of the polarization conversion unit 140 in FIG. 5 to FIG. 9. For the projection device 240, refer to the descriptions of the projection device 150 in FIG. 5 to FIG. 9. Details are not described herein again.

When the picture generation apparatus 200 is used in an HUD ghosting elimination scenario, polarization directions of different colored lights in an emergent light of the picture output unit 210 may be used to control polarization directions of different colored lights when the imaging light is projected onto a windshield. Similar to an LCOS, displays such as the OLED and the micro-LED also have analog picture coordinate systems. Therefore, in the picture generation apparatus 200, a polarization direction of a red light in the polychromatic imaging light is parallel to a horizontal axis of an analog picture coordinate system, and a polarization direction of a blue-green light in the polychromatic imaging light is perpendicular to the horizontal axis of the analog picture coordinate system. Refer to the descriptions in FIG. 10 and FIG. 11. Details are not described herein again.

The structure shown in FIG. 12 is used in HUD ghosting elimination. Because the polarization direction of the first colored light in the linearly polarized polychromatic light emergent from the beam splitting unit 220 is rotated by 90° at the polarization conversion unit 230, a polarization direction of the second colored light is a polarization direction of an emergent light (namely, a polarization direction of the linearly polarized polychromatic light) of the beam splitting unit 220.
1. The first colored light is a red light, and the second colored light is a blue-green light.

If the first colored light is a red light, the second colored light is a blue-green light. It may be learned from the descriptions in FIG. 11 that a polarization direction of the blue-green light is a short-side direction. Therefore, the polarization direction of the emergent light (namely, the linearly polarized polychromatic light, which is a panchromatic P light in the figure) of the beam splitting unit 220 is a short-side direction. That is, in the structure in FIG. 12, polarization directions of the polarizer 221 and the analyzer 222 are parallel to a short-side direction of the analog picture coordinate system of the picture output unit 210.

2. The first colored light is a blue-green light, and the second colored light is a red light.

Similarly, the polarization direction of the emergent light (namely, the linearly polarized polychromatic light, a panchromatic P light in the figure) of the beam splitting unit 220 is a long-side direction. That is, in the structure in FIG. 12, polarization directions of the polarizer 221 and the analyzer 222 are parallel to a long-side direction of the analog picture coordinate system of the picture output unit 210.

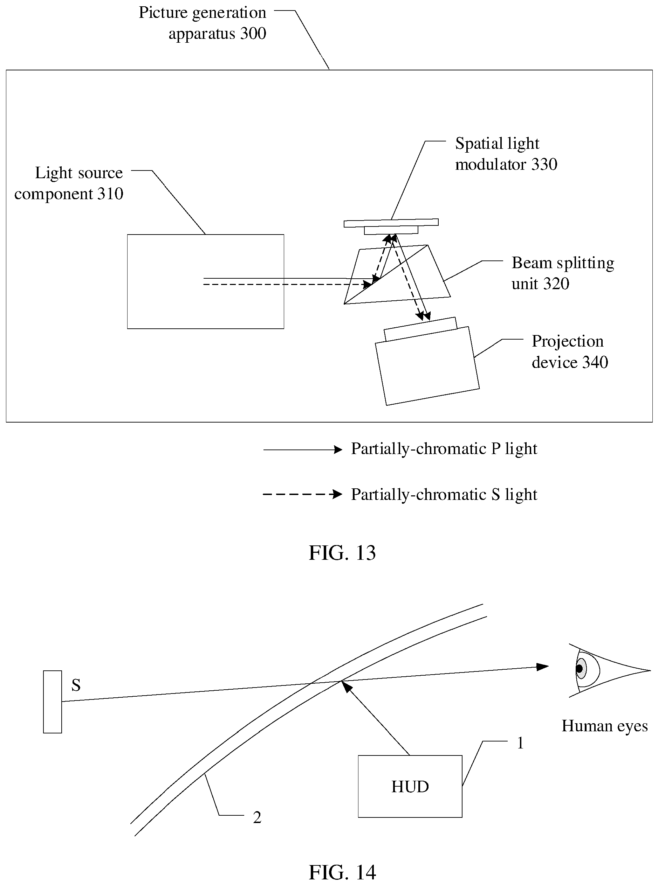

Refer to FIG. 13. A picture generation apparatus 300 according to an example, which is not an embodiment of the present invention but helpful for understanding certain aspects thereof, includes a light source 310, a beam splitting unit 320, a spatial light modulator 330, and a projection device 340.

The light source component 310 is configured to output a first linearly polarized light and a second linearly polarized light whose polarization directions are perpendicular to each other. In addition, the first linearly polarized light and the second linearly polarized light are different colored lights. The beam splitting unit 320 is configured to guide the first linearly polarized light and the second linearly polarized light to the spatial light modulator 330. The spatial light modulator 330 is configured to perform light modulation on the first linearly polarized light and the second linearly polarized light based on picture data, and output an imaging light. The projection device 340 is configured to project the imaging light. The imaging light includes a first colored light and a second colored light whose polarization directions are perpendicular to each other.

Optionally, the light source component 310 may include a first laser and a second laser. The first laser is configured to output the first linearly polarized light. The second laser is configured to output the second linearly polarized light.

Optionally, the light source component 310 may include a light source, a beam splitting unit, and a polarization conversion unit. The light source is configured to provide a light beam. The beam splitting unit is configured to separate a linearly polarized polychromatic light from the light beam, and input the linearly polarized polychromatic light into the polarization conversion unit. The polarization conversion unit is configured to convert a polarization direction of a first colored light in the linearly polarized polychromatic light, and output the first linearly polarized light and the second linearly polarized light.

For descriptions of the beam splitting unit and the polarization conversion unit in the light source component 310, refer to the descriptions of the beam splitting unit 120 and the polarization conversion unit 140 in FIG. 5 to FIG. 9. Details are not described herein again.

Optionally, the first linearly polarized light may be a red light, and the second linearly polarized light may be a blue-green light. Alternatively, the first linearly polarized light may be a blue-green light, and the second linearly polarized light may be a red light.

Optionally, the spatial light modulator 330 may include a DMD. In addition to the DMD, the spatial light modulator 330 may further include an MEMS, an LCOS, an LCD, and the like. This is not limited herein.

Optionally, when the picture generation apparatus 300 is used in an HUD ghosting elimination scenario, polarization directions of different colored lights in an emergent light of the spatial light modulator (namely, polarization directions of the first linearly polarized light and the second linearly polarized light) may be used to control polarization directions of different colored lights when the imaging light is projected onto a windshield. For any spatial light modulator, an analog picture coordinate system may be established. In the picture generation apparatus 300, polarization directions of red lights in the first linearly polarized light and the second linearly polarized light are parallel to a horizontal axis of the analog picture coordinate system, and polarization directions of blue-green lights in the first linearly polarized light and the second linearly polarized light are perpendicular to the horizontal axis of the analog picture coordinate system. Refer to the descriptions in FIG. 10 and FIG. 11. Details are not described herein again.

The structure shown in FIG. 13 is used in HUD ghosting elimination. If an extension direction of the spatial light modulator 330 shown in the figure is a long-side direction, a polarization direction of a partially-chromatic P light in the figure is parallel to the long-side direction, and a polarization direction of a partially-chromatic S light in the figure is parallel to a short-side direction. It may be learned from the descriptions in FIG. 11 that a polarization direction of the blue-green light is a short-side direction. Therefore, in the figure, the partially-chromatic S light is a blue-green light, and the partially-chromatic P light is a red light.

Similarly, if the extension direction of the spatial light modulator 330 shown in the figure is a short-side direction, the partially-chromatic S light in the figure is a red light, and the partially-chromatic P light is a blue-green light.

It should be noted that the structures shown in FIG. 2 to FIG. 13 are merely examples of the structure of the picture generation apparatus provided in embodiments of this application. A structure obtained by adaptively changing the foregoing structures also falls within the protection scope of embodiments of this application. This is not limited herein.

An embodiment of this application further provides a display device. The display device includes a host central processing unit and a picture generation apparatus. The picture generation apparatus is any one of the foregoing picture generation apparatuses. The host central processing unit is configured to send picture data to the picture generation apparatus.

Optionally, the display device further includes a reflective device. The picture generation apparatus is configured to project an imaging light onto the reflective device. The reflective device is configured to perform reflective imaging on the imaging light projected by the picture generation apparatus.

Optionally, the display device further includes a power supply that supplies power to the host central processing unit and the PGU.

In some examples, the display device is a projector, and the reflective device is a light screen. In some other examples, the display device is AR glasses.

An embodiment of this application further provides a display device. The display device includes a picture generation apparatus. The picture generation apparatus is any one of the foregoing picture generation apparatuses. The picture generation apparatus is configured to project an imaging light onto a windshield. For example, the display device is an HUD.

Optionally, the imaging light projected onto the windshield has the following characteristics: Relative to an incident plane of the windshield, a red light in the imaging light is an S light projected onto the windshield, and a blue-green light in the imaging light is a P light projected onto the windshield.

The following describes a structure of the HUD in detail with reference to FIG. 14.

FIG. 14 is a schematic diagram of a structure of an HUD according to an embodiment of this application. As shown in FIG. 14, the HUD includes a picture generation apparatus 1. The picture generation apparatus is any one of the foregoing picture generation apparatuses. The picture generation apparatus is configured to project an imaging light on a windshield 2. Different colored lights in the imaging light have different polarization directions.

For example, the windshield 2 is a windshield of a transportation means. The transportation means includes but is not limited to a vehicle, an airplane, a train, a ship, or the like.

As shown in FIG. 14, a type of the HUD may be an augmented reality (augmented reality, AR)-HUD. For the AR-HUD, a picture S is imaged on an inner side of the windshield (namely, a side on which driver's eyes are located). In some examples, the picture S is an augmented reality display picture, and is used to display information such as indication information and navigation information of an external object. The indication information of the external object includes but is not limited to a safe following distance, a surrounding obstacle, and a vehicle reversing image. The navigation information includes but is not limited to a direction arrow, a distance, a driving time, and the like. Optionally, the picture S may alternatively be a status display picture, and is used to display status information of the transportation means. Using the vehicle as an example. The status information of the transportation means includes but is not limited to information such as a driving speed, a driving mileage, a fuel amount, a water temperature, and a vehicle light status.

Optionally, to project the imaging light output by the picture generation apparatus to an appropriate location on the windshield, the HUD further includes a spatial light path structure. The spatial light path structure is configured to guide two paths of imaging lights to different locations on the windshield. The spatial light path structure includes one or more of the following optical devices: a lens, a planar reflector, a curved reflector, and the like.

An embodiment of this application further provides a transportation means. The transportation means is any one of the foregoing display devices. The transportation means includes but is not limited to a vehicle, an airplane, a train, a ship, or the like.

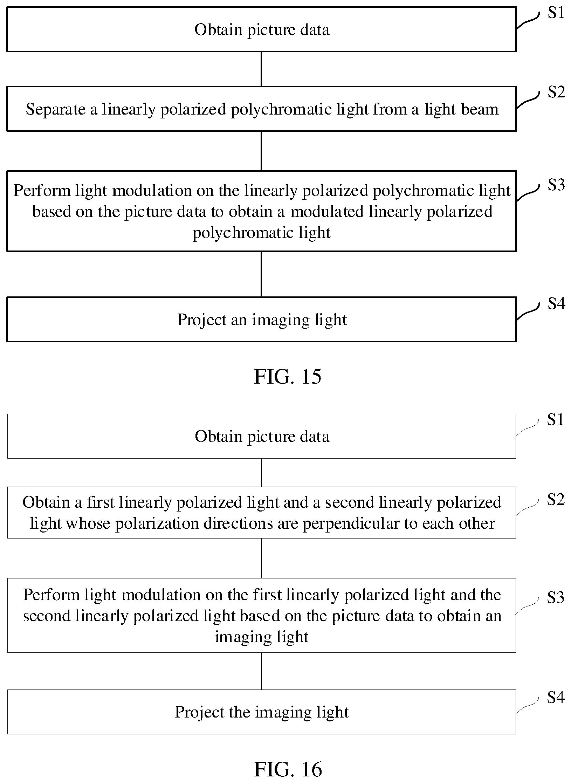

FIG. 15 is a schematic flowchart of a picture projection method according to an embodiment of this application. The method may be applied to any one of the foregoing picture generation apparatuses. As shown in FIG. 15, the method includes:
S1: Obtain picture data.

For example, the picture data may be obtained from a control device, for example, from a vehicle-mounted computer (also referred to as a vehicle-mounted infotainment system) or a mobile terminal.

S2: Separate a linearly polarized polychromatic light from a light beam.

The linearly polarized polychromatic light includes different colored lights, and polarization directions of different colored lights are the same.

S3: Perform light modulation on the linearly polarized polychromatic light based on the picture data to obtain a modulated linearly polarized polychromatic light; and
convert a polarization direction of a first colored light in the modulated linearly polarized polychromatic light to obtain an imaging light, where the imaging light includes the first colored light and a second colored light whose polarization directions are perpendicular to each other.

The imaging light includes the first colored light and the second colored light whose polarization directions are perpendicular to each other.

In an optional implementation, the first colored light includes a red light, and the second colored light includes a blue light and/or a green light.

In an optional implementation, the first colored light includes a blue light and/or a green light, and the second colored light includes a red light.

S4: Project the imaging light.

FIG. 16 is a schematic flowchart of another picture projection method according to an example, which is not an embodiment of the present invention but helpful for understanding certain aspects thereof. The method may be applied to any one of the foregoing picture generation apparatuses. As shown in FIG. 16, the method includes:
S1: Obtain picture data.

S2: Obtain a first linearly polarized light and a second linearly polarized light whose polarization directions are perpendicular to each other.

The first linearly polarized light and the second linearly polarized light are different colored lights.

In an optional implementation, the step may specifically include: obtaining a light beam; separating a linearly polarized polychromatic light from the light beam; and converting a polarization direction of a second target linearly polarized light to obtain the first linearly polarized light and the second linearly polarized light. The second target linearly polarized light is a first colored light in the linearly polarized polychromatic light.

S3: Perform light modulation on the first linearly polarized light and the second linearly polarized light based on the picture data to obtain an imaging light, where the imaging light includes the first colored light and a second colored light whose polarization directions are perpendicular to each other.

S4: Project the imaging light.

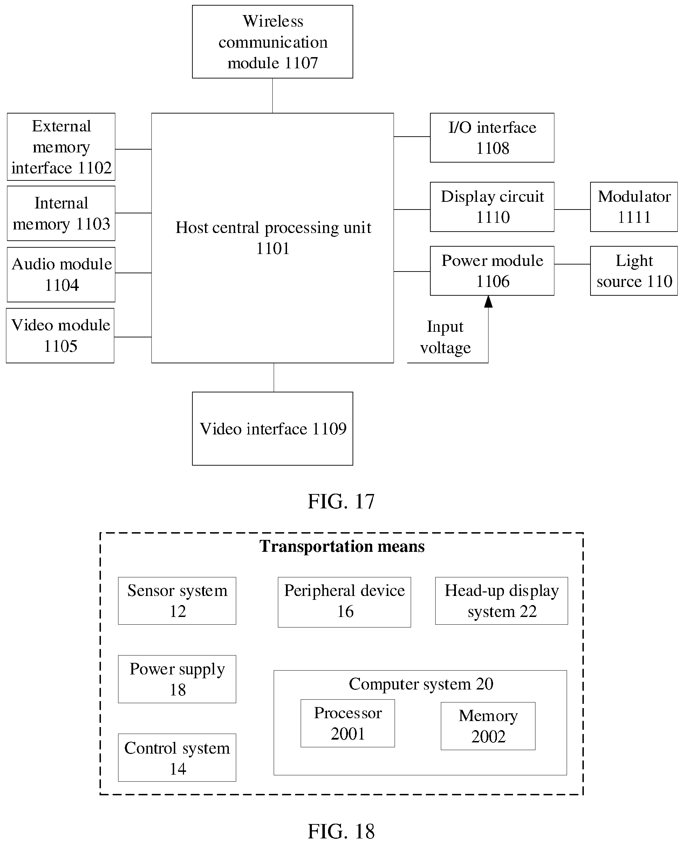

FIG. 17 is a schematic diagram of a circuit of a display device according to an embodiment of this application. As shown in FIG. 17, the circuit of the display device mainly includes a host central processing unit (host CPU) 1101, an external memory interface 1102, an internal memory 1103, an audio module 1104, a video module 1105, a power module 1106, a wireless communication module 1107, an I/O interface 1108, a video interface 1109, a display circuit 1110, a modulator 1111, and the like. The host central processing unit 1101 and peripheral elements such as the external memory interface 1102, the internal memory 1103, the audio module 1104, the video module 1105, the power module 1106, the wireless communication module 1107, the I/O interface 1108, the video interface 1109, and the display circuit 1110 may be connected through a bus. The host central processing unit 1101 may be referred to as a front-end processor.

In addition, the schematic diagram of the circuit in this embodiment of this application does not constitute a specific limitation on the display device. In some other embodiments of this application, the display device may include more or fewer components than those shown in the figure, or some components may be combined, or some components may be split, or a different component arrangement may be used. The components shown in the figure may be implemented through hardware, software, or a combination of software and hardware.

The host central processing unit 1101 may include one or more processing units. For example, the host central processing unit 1101 may include an application processor (Application Processor, AP), a modem processor, a graphics processing unit (Graphics Processing Unit, GPU), an image signal processor (Image Signal Processor, ISP), a controller, a video codec, a digital signal processor (Digital Signal Processor, DSP), a baseband processor, and/or a neural-network processing unit (Neural-network Processing Unit, NPU). Different processing units may be independent devices, or may be integrated into one or more processors.

A memory may be further disposed in the host central processing unit 1101, and is configured to store instructions and data. In some embodiments, the memory in the host central processing unit 1101 is a cache. The memory may store instructions or data that have just been used or are cyclically used by the host central processing unit 1101. If the host central processing unit 1101 needs to use the instructions or the data again, the host central processing unit 1101 may directly invoke the instructions or the data from the memory. This avoids repeated access, reduces a waiting time of the host central processing unit 1101, and improves system efficiency.

In some embodiments, the display device may further include a plurality of input/output (Input/Output, I/O) interfaces 1108 connected to the host central processing unit 1101. The interface 1108 may include an inter-integrated circuit (Inter-Integrated Circuit, I2C) interface, an inter-integrated circuit sound (Inter-Integrated Circuit Sound, I2S) interface, a pulse code modulation (Pulse Code Modulation, PCM) interface, a universal asynchronous receiver/transmitter (Universal Asynchronous Receiver/Transmitter, UART) interface, a mobile industry processor interface (Mobile Industry Processor Interface, MIPI), a general-purpose input/output (General-Purpose Input/Output, GPIO) interface, a subscriber identity module (Subscriber Identity Module, SIM) interface, a universal serial bus (Universal Serial Bus, USB) interface, and/or the like. The I/O interface 1108 may be connected to a device like a mouse, a touchpad, a keyboard, a camera, a speaker/horn, or a microphone, or may be connected to a physical button (for example, a volume button, a brightness adjustment button, or a power-on/off button) on the display device.

The external memory interface 1102 may be used to connect to an external memory card, for example, a micro SD card, to extend a storage capability of the display device. The external memory card communicates with the host central processing unit 1101 through the external memory interface 1102, to implement a data storage function.

The internal memory 1103 may be configured to store computer-executable program code. The executable program code includes instructions. The internal memory 1103 may include a program storage region and a data storage region. The program storage region may store an operating system, an application required by at least one function (such as a calling function or a time setting function), and the like. The data storage region may store data (such as a phone book and world time) created in a process of using the display device. In addition, the internal memory 1103 may include a high-speed random access memory, and may further include a non-volatile memory, for example, at least one magnetic disk storage device, a flash storage device, a universal flash storage (Universal Flash Storage, UFS), or the like. The host central processing unit 1101 runs the instructions stored in the internal memory 1103 and/or the instructions stored in the memory disposed in the host central processing unit 1101, to execute various functional applications of the display device and data processing.

The display device may implement an audio function, for example, music playing and calling, through the audio module 1104, the application processor, and the like.

The audio module 1104 is configured to convert digital audio information into an analog audio signal for output, and is also configured to convert analog audio input into a digital audio signal. The audio module 1104 may be further configured to encode and decode an audio signal, for example, perform audio playing or recording. In some embodiments, the audio module 1104 may be disposed in the processor 1101, or some functional modules of the audio module 1104 are disposed in the processor 1101.

The video interface 1109 may receive audio and video signals input from the outside, and may be specifically a high definition multimedia interface (High Definition Multimedia Interface, HDMI), a digital video interface (Digital Visual Interface, DVI), a video graphics array (Video Graphics Array, VGA), a display port (Display port, DP), and the like. The video interface 1109 may further output a video to the outside. When the display device is used as a head-up display, the video interface 1109 may receive a speed signal and a power signal that are input by a peripheral device, and may further receive an AR video signal that is input from the outside. When the display device is used as a projector, the video interface 1109 may receive a video signal input by an external computer or a terminal device.

The video module 1105 may decode the video input by the video interface 1109, for example, perform H.264 decoding. The video module may further encode a video collected by the display device, for example, perform H.264 encoding on a video collected by an external camera. In addition, the host central processing unit 1101 may also decode the video input by the video interface 1109, and then output a decoded picture signal to the display circuit 1110.

The display circuit 1110 and the modulator 1111 are configured to display a corresponding picture. In this embodiment, the video interface 1109 receives an externally input video source signal, the video module 1105 performs decoding and/or digitization processing and outputs one or more channels of picture signals to the display circuit 1110, and the display circuit 1110 drives, based on the input picture signal, the modulator 1111 to perform imaging on an incident polarized light, to output an imaging light. In addition, the host central processing unit 1101 may also output a picture signal to the display circuit 1110.

In this embodiment, the display circuit 1110 and the modulator 1111 are electronic elements in a modulation unit 230, and the display circuit 1110 may be referred to as a drive circuit.

The power module 1106 is configured to supply power to the host central processing unit 1101 and a light source 110 based on input power (for example, a direct current). The power module 1106 may include a rechargeable battery. The rechargeable battery may supply power to the host central processing unit 1101 and the light source 110. Light emitted by the light source 110 may be transmitted to the modulator 1111 for imaging, to form a picture light signal.

The wireless communication module 1107 may enable the display device to perform wireless communication with the outside, and may provide wireless communication solutions such as a wireless local area network (Wireless Local Area Network, WLAN) (like a wireless fidelity (Wireless Fidelity, Wi-Fi) network), Bluetooth (Bluetooth, BT), a global navigation satellite system (Global Navigation Satellite System, GNSS), frequency modulation (Frequency Modulation, FM), a near field communication (Near Field Communication, NFC) technology, and an infrared (Infrared, IR) technology. The wireless communication module 1107 may be one or more devices integrating at least one communication processing module. The wireless communication module 1107 receives an electromagnetic wave through an antenna, performs frequency modulation and filtering processing on an electromagnetic wave signal, and sends a processed signal to the host central processing unit 1101. The wireless communication module 1107 may further receive a to-be-sent signal from the host central processing unit 1101, perform frequency modulation and amplification on the signal, and convert the signal into an electromagnetic wave for radiation through the antenna.

Besides, in addition to being input through the video interface 1109, video data decoded by the video module 1105 may also be received in a wireless manner through the wireless communication module 1107 or read from an external memory. For example, the display device may receive the video data from the terminal device or a vehicle-mounted infotainment system through a wireless local area network in a vehicle. The display device may further read audio and video data stored in the external memory.

The display device may be installed on a transportation means. FIG. 18 is a schematic diagram of a possible functional framework of a transportation means according to an embodiment of this application.

As shown in FIG. 18, the functional framework of the transportation means may include various subsystems, for example, a sensor system 12, a control system 14, one or more peripheral devices 16 (one peripheral device is used as an example in the figure), a power supply 18, a computer system 20, and a head-up display system 22 shown in the figure. Optionally, the transportation means may further include another functional system, for example, an engine system that provides power for the transportation means. This is not limited herein in this application.

The sensor system 12 may include a plurality of detection apparatuses. The detection apparatuses can sense measured information, and convert the sensed information into an electrical signal or other information in a required form based on a specific rule for output. As shown in the figure, the detection apparatuses may include a global positioning system (global positioning system, GPS), a vehicle speed sensor, an inertial measurement unit (inertial measurement unit, IMU), a radar unit, a laser rangefinder, a camera apparatus, a wheel speed sensor, a steering sensor, a gear sensor, or other elements used for automatic detection. This is not limited in this application.

The control system 14 may include a plurality of elements, for example, a steering unit, a brake unit, a lighting system, a self-driving system, a map navigation system, a network time system, and an obstacle avoidance system shown in the figure. Optionally, the control system 14 may further include elements such as a throttle controller and an engine controller that are configured to control a driving speed of a vehicle. This is not limited in this application.

The peripheral device 16 may include a plurality of elements, for example, a communication system, a touchscreen, a user interface, a microphone, and a speaker shown in the figure. The communication system is configured to implement network communication between the transportation means and a device other than the transportation means. In practice, the communication system may use a wireless communication technology or a wired communication technology to implement network communication between the transportation means and the another device. The wired communication technology may mean using a network cable, an optical fiber, or the like to perform communication between the vehicle and the another device.

The power supply 18 represents a system used to provide power or energy for the vehicle, and may include but is not limited to a rechargeable lithium battery or lead-acid battery. In practice, one or more battery modules in the power supply are configured to provide electrical energy or energy for starting the vehicle. A type and a material of the power supply are not limited in this application.

A plurality of functions of the transportation means are controlled and implemented by the computer system 20. The computer system 20 may include one or more processors 2001 (one processor is shown as an example in the figure) and a memory 2002 (which may also be referred to as a storage apparatus). In practice, the memory 2002 is inside the computer system 20, or may be outside the computer system 20, for example, may be used as a cache in the transportation means. This is not limited in this application.

The processor 2001 may include one or more general-purpose processors, for example, a graphics processing unit (graphics processing unit, GPU). The processor 2001 may be configured to run a related program stored in the memory 2002 or instructions that correspond to a program and that are stored in the memory 2002, to implement a corresponding function of the vehicle.

The memory 2002 may include a volatile memory (volatile memory), for example, a RAM. The memory may alternatively include a non-volatile memory (non-volatile memory), for example, a ROM, a flash memory (flash memory), an HDD, or a solid-state drive SSD. The memory 2002 may alternatively include a combination of the foregoing types of memories. The memory 2002 may be configured to store a set of program code or instructions corresponding to program code, so that the processor 2001 invokes the program code or the instructions stored in the memory 2002 to implement a corresponding function of the vehicle. The function includes but is not limited to a part of or all functions in the schematic diagram of the functional framework of the vehicle shown in FIG. 16. In this application, the memory 2002 may store a set of program code used for vehicle control. The processor 2001 may control safe driving of the vehicle by invoking the program code. How to implement safe driving of the vehicle is specifically described in detail below in this application.

Optionally, in addition to storing the program code or the instructions, the memory 2002 may further store information such as a road map, a driving route, and sensor data. The computer system 20 may implement a vehicle-related function in combination with other elements in the schematic diagram of the functional framework of the vehicle, such as a sensor and a GPS in the sensor system. For example, the computer system 20 may control a driving direction or a driving speed of the transportation means based on data input of the sensor system 12. This is not limited in this application.

The head-up display system 22 may include a plurality of elements, for example, a windshield, a controller, and a head-up display shown in the figure. The controller is configured to generate a picture (for example, generate a picture including a vehicle status like a vehicle speed and a power/fuel amount, and a picture including augmented reality AR content) according to a user instruction, and send the picture to the head-up display for display. The head-up display may include a combination of a picture generation unit and a reflector. The windshield is configured to cooperate with the head-up display to implement a light path of the head-up display system, so that a target picture is presented in front of a driver. It should be noted that functions of a part of elements in the head display system may also be implemented by another subsystem of the vehicle. For example, the controller may alternatively be an element in the control system.

FIG. 16 of this application shows that four subsystems are included. The sensor system 12, the control system 14, the computer system 20, and the head-up display system 22 are merely examples, and do not constitute a limitation. In practice, the transportation means may combine a plurality of elements in the vehicle based on different functions, to obtain subsystems with corresponding different functions. In practice, the transportation means may include more or fewer systems or elements. This is not limited in this application.

The transportation means may be a car, a truck, a motorcycle, a bus, a ship, an airplane, a helicopter, a lawn mower, an entertainment car, a playground vehicle, a construction device, a tram, a golf cart, a train, a handcart, or the like. This is not specially limited in embodiments of this application.

It may be clearly understood by a person skilled in the art that, for a purpose of convenient and brief description, for detailed working processes of the foregoing systems, apparatuses, and units, refer to corresponding processes in the foregoing method embodiments. Details are not described herein.

In the several embodiments provided in this application, it should be understood that the disclosed systems, apparatuses, and methods may be implemented in other manners. For example, the described apparatus embodiments are merely examples. For example, division into the units is merely logical function division and may be other division in practice. For example, a plurality of units or components may be combined or integrated into another system, or some features may be ignored or not performed. In addition, the displayed or discussed mutual couplings or direct couplings or communication connections may be implemented through some interfaces. Indirect couplings or communication connections between the apparatuses or units may be implemented in electrical, mechanical, or other forms.

The units described as separate parts may or may not be physically separate, and parts displayed as units may or may not be physical units, may be located in one location, or may be distributed on a plurality of network units. A part of or all the units may be selected based on an actual requirement to implement objectives of the solutions in this embodiment.

In addition, functional units in embodiments of this application may be integrated into one processing unit. Each of the units may alternatively exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or a part contributing to the conventional technology, or all or a part of the technical solutions may be implemented in a form of a software product. The computer software product is stored in a storage medium and includes a plurality of instructions for instructing a computer device (which may be a personal computer, a server, a network device, or the like) to perform all or some of the steps of the methods in embodiments of this application. The storage medium includes any medium that can store program code, for example, a USB flash drive, a removable hard disk, a read-only memory (read-only memory, ROM), a random access memory (random access memory, RAM), a magnetic disk, or an optical disc.

## Claims

1. A picture generation apparatus (100), comprising:
a light source (110), configured to provide a light beam; and
a beam splitting unit (120), configured to separate a linearly polarized polychromatic light from the light beam, and input the linearly polarized polychromatic light into a spatial light modulator (130),
wherein the spatial light modulator (130) is configured to perform light modulation on the linearly polarized polychromatic light based on picture data,
**characterized in that**
the spatial light modulator (130) is further configured to input a modulated linearly polarized polychromatic light into a polarization conversion unit (140); and
the polarization conversion unit (140) is configured to convert a polarization direction of a first colored light in the modulated linearly polarized polychromatic light, and output an imaging light, wherein the imaging light comprises the first colored light and a second colored light whose polarization directions are perpendicular to each other.

2. The picture generation apparatus (100) according to claim 1, wherein the polarization conversion unit (140) comprises a retarder stack filter, RSF, and the RSF is configured to rotate the polarization direction of the first colored light by 90°.

3. The picture generation apparatus (100) according to claim 1 or 2, wherein
the first colored light comprises a red light, and the second colored light comprises a blue light and/or a green light; or
the first colored light comprises a blue light and/or a green light, and the second colored light comprises a red light.

4. The picture generation apparatus (100) according to any one of claims 1 to 3, wherein the beam splitting unit (120) comprises:
a polarization beam splitter (1211, 1212), configured to guide the linearly polarized polychromatic light to the spatial light modulator (130), wherein the linearly polarized polychromatic light is a P light;
the spatial light modulator (130) is configured to perform light modulation on the linearly polarized polychromatic light based on the picture data, wherein the modulated linearly polarized polychromatic light is an S light; and
the polarization beam splitter (1211, 1212) is further configured to guide the modulated linearly polarized polychromatic light to the polarization conversion unit (140).

5. The picture generation apparatus (100) according to claim 4, wherein the beam splitting unit (120) further comprises:
a polarizer (122), wherein the polarizer (122) is located on a light path between the light source (110) and the polarization beam splitter (1212), and the polarizer (122) is configured to separate the P light from the light beam to obtain the linearly polarized polychromatic light.

6. The picture generation apparatus (100) according to any one of claims 1 to 3, wherein the beam splitting unit (120) comprises:
a polarization beam splitter (1211, 1212), configured to guide the linearly polarized polychromatic light to the spatial light modulator (130), wherein the linearly polarized polychromatic light is an S light;
the spatial light modulator (130) is configured to perform light modulation on the linearly polarized polychromatic light based on the picture data, wherein the modulated linearly polarized polychromatic light is a P light; and
the polarization beam splitter (1211, 1212) is further configured to guide the modulated linearly polarized polychromatic light to the polarization conversion unit (140).

7. The picture generation apparatus (100) according to claim 6, wherein the beam splitting unit (120) further comprises:
a polarizer (122), wherein the polarizer is located on a light path between the light source (110) and the polarization beam splitter (1212), and the polarizer (122) is configured to separate the S light from the light beam to obtain the linearly polarized polychromatic light.

8. The picture generation apparatus (100) according to any one of claims 4 to 7, wherein the polarization beam splitter (120) comprises a wire grid (1212) and/or a polarization beam splitting prism (1211).

9. The picture generation apparatus (100) according to any one of claims 1 to 3, wherein the spatial light modulator (130) is specifically configured to:
perform light modulation on the linearly polarized polychromatic light based on the picture data, and transmit the modulated linearly polarized polychromatic light.

10. The picture generation apparatus (100) according to claim 9, wherein the beam splitting unit (120) further comprises:
a polarizer (122), configured to separate a P light or an S light from the light beam to obtain the linearly polarized polychromatic light.

11. The picture generation apparatus (100) according to any one of claims 1 to 10, wherein the spatial light modulator (130) comprises at least one of a liquid crystal on silicon LCOS, a liquid crystal display LCD (132), an organic light-emitting diode OLED, a micro-light-emitting diode micro-LED, a digital micromirror device DMD, and a micro-electro-mechanical system MEMS.

12. A display device, comprising a host central processing unit (1101) and the picture generation apparatus (100) according to any one of claims 1 to 11, wherein
the host central processing unit (1101) is configured to send picture data to the spatial light modulator (130).

13. A vehicle, comprising a display device and a windshield, wherein the display device comprises a picture generation apparatus (100) according to any one of claims 1 to 11, wherein the picture generation apparatus (100) is configured to project an imaging light onto the windshield.

14. The vehicle according to claim 13, wherein
a first colored light in the imaging light is a red light, and the first colored light is an S light projected onto the windshield.

15. The vehicle according to claim 13, wherein
a first colored light in the imaging light is a blue light and/or a green light, and the first colored light is a P light projected onto the windshield.

## Patentansprüche

1. Bilderzeugungsvorrichtung (100), umfassend:
eine Lichtquelle (110), die dazu eingerichtet ist, einen Lichtstrahl bereitzustellen; und
eine Strahlteilereinheit (120), die dazu eingerichtet ist, ein linear polarisiertes polychromatisches Licht aus dem Lichtstrahl abzutrennen und das linear polarisierte polychromatische Licht in einen Flächenlichtmodulator (130) einzuspeisen,
wobei der Flächenlichtmodulator (130) dazu eingerichtet ist, an dem linear polarisierten polychromatischen Licht auf Grundlage von Bilddaten eine Lichtmodulation durchzuführen,
**dadurch gekennzeichnet, dass**
der Flächenlichtmodulator (130) ferner dazu eingerichtet ist, ein moduliertes linear polarisiertes polychromatisches Licht in eine Polarisationsumwandlungseinheit (140) einzuspeisen; und
die Polarisationsumwandlungseinheit (140) dazu eingerichtet ist, eine Polarisationsrichtung eines ersten farbigen Lichts in dem modulierten linear polarisierten polychromatischen Licht umzuwandeln und ein Bildgebungslicht auszugeben, wobei das Bildgebungslicht das erste farbige Licht und ein zweites farbiges Licht, deren Polarisationsrichtungen senkrecht zueinander stehen, umfasst.

2. Bilderzeugungsvorrichtung (100) nach Anspruch 1, wobei die Polarisationsumwandlungseinheit (140) einen Verzögerungsplattenfilter, RSF, umfasst und der RSF dazu eingerichtet ist, die Polarisationsrichtung des ersten farbigen Lichts um 90° zu drehen.

3. Bilderzeugungsvorrichtung (100) nach Anspruch 1 oder 2, wobei das erste farbige Licht ein rotes Licht umfasst und das zweite farbige Licht ein blaues Licht und/oder ein grünes Licht umfasst; oder
das erste farbige Licht ein blaues Licht und/oder ein grünes Licht umfasst und das zweite farbige Licht ein rotes Licht umfasst.

4. Bilderzeugungsvorrichtung (100) nach einem der Ansprüche 1 bis 3, wobei die Strahlteilereinheit (120) Folgendes umfasst:
einen Polarisationsstrahlteiler (1211, 1212), der dazu eingerichtet ist, das linear polarisierte polychromatische Licht zum Flächenlichtmodulator (130) zu leiten, wobei es sich bei dem linear polarisierten polychromatischen Licht um ein P-Licht handelt;
wobei der Flächenlichtmodulator (130) dazu eingerichtet ist, an dem linear polarisierten polychromatischen Licht auf Grundlage der Bilddaten eine Lichtmodulation durchzuführen, wobei es sich bei dem modulierten linear polarisierten polychromatischen Licht um S-Licht handelt; und
wobei der Polarisationsstrahlteiler (1211, 1212) ferner dazu eingerichtet ist, das modulierte linear polarisierte polychromatische Licht zur Polarisationsumwandlungseinheit (140) zu leiten.

5. Bilderzeugungsvorrichtung (100) nach Anspruch 4, wobei die Strahlteilereinheit (120) ferner Folgendes umfasst:
einen Polarisator (122), wobei sich der Polarisator (122) auf einem Lichtweg zwischen der Lichtquelle (110) und dem Polarisationsstrahlteiler (1212) befindet und der Polarisator (122) dazu eingerichtet ist, das P-Licht vom Lichtstrahl zu trennen, um das linear polarisierte polychromatische Licht zu erhalten.

6. Bilderzeugungsvorrichtung (100) nach einem der Ansprüche 1 bis 3, wobei die Strahlteilereinheit (120) Folgendes umfasst:
einen Polarisationsstrahlteiler (1211, 1212), der dazu eingerichtet ist, das linear polarisierte polychromatische Licht zum Flächenlichtmodulator (130) zu leiten, wobei es sich bei dem linear polarisierten polychromatischen Licht um S-Licht handelt;
wobei der Flächenlichtmodulator (130) dazu eingerichtet ist, an dem linear polarisierten polychromatischen Licht auf Grundlage der Bilddaten eine Lichtmodulation durchzuführen, wobei es sich bei dem modulierten linear polarisierten polychromatischen Licht um P-Licht handelt; und
wobei der Polarisationsstrahlteiler (1211, 1212) ferner dazu eingerichtet ist, das modulierte linear polarisierte polychromatische Licht zur Polarisationsumwandlungseinheit (140) zu leiten.

7. Bilderzeugungsvorrichtung (100) nach Anspruch 6, wobei die Strahlteilereinheit (120) ferner Folgendes umfasst:
einen Polarisator (122), wobei sich der Polarisator auf einem Lichtweg zwischen der Lichtquelle (110) und dem Polarisationsstrahlteiler (1212) befindet und der Polarisator (122) dazu eingerichtet ist, das S-Licht vom Lichtstrahl zu trennen, um das linear polarisierte polychromatische Licht zu erhalten.

8. Bilderzeugungsvorrichtung (100) nach einem der Ansprüche 4 bis 7, wobei der Polarisationsstrahlteiler (120) ein Drahtgitter (1212) und/oder ein Polarisationsstrahlteilungsprisma (1211) umfasst.

9. Bilderzeugungsvorrichtung (100) nach einem der Ansprüche 1 bis 3, wobei der Flächenlichtmodulator (130) insbesondere dazu eingerichtet ist:
an dem linear polarisierten polychromatischen Licht auf Grundlage der Bilddaten eine Lichtmodulation durchzuführen und das modulierte linear polarisierte polychromatische Licht zu übertragen.

10. Bilderzeugungsvorrichtung (100) nach Anspruch 9, wobei die Strahlteilereinheit (120) ferner Folgendes umfasst:
einen Polarisator (122), der dazu eingerichtet ist, ein P-Licht oder ein S-Licht aus dem Lichtstrahl abzutrennen, um das linear polarisierte polychromatische Licht zu erhalten.

11. Bilderzeugungsvorrichtung (100) nach einem der Ansprüche 1 bis 10, wobei der Flächenlichtmodulator (130) mindestens eines von einem Flüssigkristall auf Silizium, LCOS, einem Flüssigkristalldisplay, LCD, (132), einer organischen Leuchtdiode, OLED, einer Mikro-Leuchtdiode, Mikro-LED, einem Mikrospiegelaktor, DMD, und einem mikroelektromechanischen System, MEMS, umfasst.

12. Anzeigevorrichtung, umfassend eine Host-Zentralverarbeitungseinheit (1101) und die Bilderzeugungsvorrichtung (100) nach einem der Ansprüche 1 bis 11, wobei
die Host-Zentralverarbeitungseinheit (1101) dazu eingerichtet ist, Bilddaten an den Flächenlichtmodulator (130) zu senden.

13. Fahrzeug, umfassend eine Anzeigevorrichtung und eine Windschutzscheibe, wobei die Anzeigevorrichtung eine Bilderzeugungsvorrichtung (100) nach einem der Ansprüche 1 bis 11 umfasst, wobei die Bilderzeugungsvorrichtung (100) dazu eingerichtet ist, ein Bildgebungslicht auf die Windschutzscheibe zu projizieren.

14. Fahrzeug nach Anspruch 13, wobei
ein erstes farbiges Licht in dem Bildgebungslicht ein rotes Licht ist und das erste farbige Licht ein S-Licht ist, das auf die Windschutzscheibe projiziert wird.

15. Fahrzeug nach Anspruch 13, wobei
ein erstes farbiges Licht in dem Bildgebungslicht ein blaues Licht und/oder ein grünes Licht ist und das erste farbige Licht ein P-Licht ist, das auf die Windschutzscheibe projiziert wird.

## Revendications

1. Appareil de génération d'image (100), comprenant :
une source lumineuse (110), configurée pour fournir un faisceau lumineux ; et
une unité de séparation de faisceau (120), configurée pour séparer une lumière polychromatique polarisée linéairement du faisceau lumineux, et introduire la lumière polychromatique polarisée linéairement dans un modulateur spatial de lumière (130),
dans lequel le modulateur spatial de lumière (130) est configuré pour réaliser une modulation de lumière sur la lumière polychromatique polarisée linéairement sur la base de données d'image,
**caractérisé en ce que**
le modulateur spatial de lumière (130) est également configuré pour introduire une lumière polychromatique polarisée linéairement modulée dans une unité de conversion de polarisation (140) ; et
l'unité de conversion de polarisation (140) est configurée pour convertir une direction de polarisation d'une première lumière colorée dans la lumière polychromatique polarisée linéairement modulée, et produire une lumière d'imagerie, dans lequel la lumière d'imagerie comprend la première lumière colorée et une seconde lumière colorée dont les directions de polarisation sont perpendiculaires l'une à l'autre.

2. Appareil de génération d'image (100) selon la revendication 1, dans lequel l'unité de conversion de polarisation (140) comprend un filtre d'empilement de retardateurs, RSF, et le RSF est configuré pour faire tourner la direction de polarisation de la première lumière colorée de 90°.

3. Appareil de génération d'image (100) selon la revendication 1 ou 2, dans lequel
la première lumière colorée comprend une lumière rouge, et la seconde lumière colorée comprend une lumière bleue et/ou une lumière verte ; ou
la première lumière colorée comprend une lumière bleue et/ou une lumière verte, et la seconde lumière colorée comprend une lumière rouge.

4. Appareil de génération d'image (100) selon l'une quelconque des revendications 1 à 3, dans lequel l'unité de séparation de faisceau (120) comprend :
un séparateur de faisceau polarisant (1211, 1212), configuré pour guider la lumière polychromatique polarisée linéairement vers le modulateur spatial de lumière (130), dans lequel la lumière polychromatique polarisée linéairement est une lumière P ;
le modulateur spatial de lumière (130) est configuré pour réaliser une modulation de lumière sur la lumière polychromatique polarisée linéairement sur la base des données d'image, dans lequel la lumière polychromatique polarisée linéairement modulée est une lumière S ; et
le séparateur de faisceau polarisant (1211, 1212) est également configuré pour guider la lumière polychromatique polarisée linéairement modulée vers l'unité de conversion de polarisation (140).

5. Appareil de génération d'image (100) selon la revendication 4, dans lequel l'unité de séparation de faisceau (120) comprend également :
un polariseur (122), dans lequel le polariseur (122) est situé sur un chemin lumineux entre la source lumineuse (110) et le séparateur de faisceau polarisant (1212), et le polariseur (122) est configuré pour séparer la lumière P du faisceau lumineux pour obtenir la lumière polychromatique polarisée linéairement.

6. Appareil de génération d'image (100) selon l'une quelconque des revendications 1 à 3, dans lequel l'unité de séparation de faisceau (120) comprend :
un séparateur de faisceau polarisant (1211, 1212), configuré pour guider la lumière polychromatique polarisée linéairement vers le modulateur spatial de lumière (130), dans lequel la lumière polychromatique polarisée linéairement est une lumière S ;
le modulateur spatial de lumière (130) est configuré pour réaliser une modulation de lumière sur la lumière polychromatique polarisée linéairement sur la base des données d'image, dans lequel la lumière polychromatique polarisée linéairement modulée est une lumière P ; et
le séparateur de faisceau polarisant (1211, 1212) est également configuré pour guider la lumière polychromatique polarisée linéairement modulée vers l'unité de conversion de polarisation (140).

7. Appareil de génération d'image (100) selon la revendication 6, dans lequel l'unité de séparation de faisceau (120) comprend également :
un polariseur (122), dans lequel le polariseur est situé sur un chemin lumineux entre la source lumineuse (110) et le séparateur de faisceau polarisant (1212), et le polariseur (122) est configuré pour séparer la lumière S du faisceau lumineux pour obtenir la lumière polychromatique polarisée linéairement.

8. Appareil de génération d'image (100) selon l'une quelconque des revendications 4 à 7, dans lequel le séparateur de faisceau polarisant (120) comprend une grille métallique (1212) et/ou un prisme de séparation de faisceau polarisant (1211).

9. Appareil de génération d'image (100) selon l'une quelconque des revendications 1 à 3, dans lequel le modulateur spatial de lumière (130) est spécifiquement configuré pour :
réaliser une modulation de lumière sur la lumière polychromatique polarisée linéairement sur la base des données d'image, et transmettre la lumière polychromatique polarisée linéairement modulée.

10. Appareil de génération d'image (100) selon la revendication 9, dans lequel l'unité de séparation de faisceau (120) comprend également :
un polariseur (122), configuré pour séparer une lumière P ou une lumière S du faisceau lumineux pour obtenir la lumière polychromatique polarisée linéairement.

11. Appareil de génération d'image (100) selon l'une quelconque des revendications 1 à 10, dans lequel le modulateur spatial de lumière (130) comprend au moins l'un des éléments suivants : un cristal liquide sur silicium LCOS, un affichage à cristaux liquides LCD (132), une diode électroluminescente organique OLED, une micro-diode électroluminescente micro-LED, un dispositif à micromiroirs numériques DMD, et un système micro-électro-mécanique MEMS.

12. Dispositif d'affichage, comprenant une unité centrale de traitement hôte (1101) et l'appareil de génération d'image (100) selon l'une quelconque des revendications 1 à 11, dans lequel l'unité centrale de traitement hôte (1101) est configurée pour envoyer des données d'image au modulateur spatial de lumière (130).

13. Véhicule, comprenant un dispositif d'affichage et un pare-brise, dans lequel le dispositif d'affichage comprend un appareil de génération d'image (100) selon l'une quelconque des revendications 1 à 11, dans lequel l'appareil de génération d'image (100) est configuré pour projeter une lumière d'imagerie sur le pare-brise.

14. Véhicule selon la revendication 13, dans lequel
une première lumière colorée dans la lumière d'imagerie est une lumière rouge, et la première lumière colorée est une lumière S projetée sur le pare-brise.

15. Véhicule selon la revendication 13, dans lequel
une première lumière colorée dans la lumière d'imagerie est une lumière bleue et/ou une lumière verte, et la première lumière colorée est une lumière P projetée sur le pare-brise.
